# EUROPEAN PATENT APPLICATION

(11) **EP 2 544 447 A2**
(43) Date of publication of application: **09.01.2013**
(21) Application number: 11763086.3
(22) Date of filing: 01.04.2011
(51) Int. Cl.: H04N 7/08

(54) **METHOD AND APPARATUS FOR TRANSMITTING DIGITAL BROADCAST CONTENT FOR PROVIDING TWO-DIMENSIONAL AND THREE-DIMENSIONAL CONTENT, AND METHOD AND APPARATUS FOR RECEIVING DIGITAL BROADCAST CONTENT**

(30) Priority: 20.05.2010 US 346607 P; 27.04.2010 US 328256 P; 07.04.2010 US 321533 P; 06.04.2010 US 321207 P; 02.04.2010 US 320366 P
(71) Applicant: Samsung Electronics Co., Ltd, Gyeonggi-do 443-742 (KR)
(72) Inventor: LEE, Dae-Jong, Suwon-si Gyeonggi-do 443-717 (KR); LEE, Jae-Jun, Suwon-si Gyeonggi-do 443-773 (KR); JANG, Yong-Seok, Hwaseong-si Gyeonggi-do 445-710 (KR); CHO, Bong-Je, Busan 617-773 (KR); JUNG, Kil-Soo, Osan-si Gyeonggi-do 447-740 (KR); KIM, Yong-Tae, Seoul 137-062 (KR); SEO, Ju-Hee, Hwaseong-si Gyeonggi-do 445-757 (KR); PARK, Hong-Seok, Anyang-si Gyeonggi-do 431-050 (KR)
(74) Representative: Fearnside, Andrew Simon
(86) International application number: PCT/KR2011/002296
(87) International publication number: WO 2011/122914

(57) **Abstract**

A method of transmitting digital broadcasting content for providing 2D content or 3D content. The method includes: encoding content including at least one from among the 2D content and the 3D content and generating an elementary stream including encoded data of the content; generating service additional information including electronic program guide (EPG) information of the digital broadcasting content and inserting at least one, into the service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and multiplexing the elementary stream and the service additional information and then generating a transport stream.

## Description

### TECHNICAL FIELD

The present invention relates to a method of transmitting and receiving digital broadcasting content providing 2-dimensional (2D) content or 3-dimensional (3D) content.

### BACKGROUND ART

Demands for 3-dimensional (3D) content providing a sense of reality and a 3D effect are increasing. Also, broadcasting content or a broadcasting program, which is produced to be reproduced in 3D, is appearing.

A broadcasting receiving apparatus may provide additional information regarding a program or a channel by displaying a video and electronic program guide (EPG) information on a screen while reproducing video information and audio information that are provided through a broadcasting program.

A digital broadcasting transmitting system transmits the additional information regarding a program or a channel in a simple text format together with a broadcasting program stream. A digital television (DTV) constitutes an EPG screen by using the additional information regarding a program or a channel received together with a broadcasting program. A viewer may obtain information regarding a current channel or a current program through the EPG screen, and may select and switch a channel or a program.

As broadcasting content provided through a digital broadcasting system becomes more diverse, additional information about a channel or a program is increasing.

### DETAILED DESCRIPTION OF THE INVENTION TECHNICAL PROBLEM

The present invention provides a method of providing various pieces of information regarding digital broadcasting content providing 2-dimensional (2D) content or 3-dimensional (3D) content by using an electronic program guide (EPG) of a digital broadcasting system so that a user may effectively use the EPG.

### TECHNICAL SOLUTION

According to an aspect of the present invention, there is provided a method of transmitting digital broadcasting content for providing 2D content or 3D content, the method including: encoding content including at least one from among the 2D content and the 3D content and generating an elementary stream including encoded data of the content; generating service additional information including electronic program guide (EPG) information of the digital broadcasting content, and inserting at least one, into the service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and multiplexing the elementary stream and the service additional information and then generating a transport stream.

### DESCRIPTION OF THE DRAWINGS

FIG. 1 is a block diagram of a digital broadcasting content transmitting apparatus according to an embodiment of the present invention;
FIG. 2 is a block diagram of a digital broadcasting content receiving apparatus according to an embodiment of the present invention;
FIG. 3 is a diagram showing a hierarchical structure of program specific information protocol (PSIP) information according to advanced television systems committee (ATSC) format, according to an embodiment of the present invention;
FIG. 4 is a diagram showing a structure with which digital broadcasting content is transmitted using a digital video broadcasting (DVB) method, according to an embodiment of the present invention;
FIG. 5 is a diagram showing a hierarchical structure of service information (SI) according to a DVB format, according to an embodiment of the present invention;
FIGS. 6 through 10 are diagrams respectively showing syntaxes of terrestrial virtual channel table (TVCT) information, event information table (EIT) information, extended text table (ETT) information, rating region table (RRT) information, and system time table (STT) information of PSIP information according to the ATSC format, according to an embodiment of the present invention;
FIG. 11 is a diagram showing a screen on which electronic program guide (EPG) information is displayed based on the TVCT information, the RRT information, the ETT information, the EIT information, and the STT information of the PSIP information according to the ATSC format, according to an embodiment of the present invention;
FIGS. 12 through 15 are diagrams respectively showing syntaxes of bouquet association table (BAT) information, network information table (NIT) information, service description table (SDT) information, and event information table (EIT) information of SI information according to the DVB format, according to an embodiment of the present invention;
FIG. 16 is a schematic diagram for describing an operation of a digital broadcasting content receiving apparatus for reproducing broadcasting content and an EPG screen by using service additional information, according to another embodiment of the present invention;
FIG. 17 is a schematic diagram for describing an operation of the digital broadcasting content receiving apparatus of FIG. 16 for displaying 3D broadcasting content and a 3D EPG screen by using service additional information, according to an embodiment of the present invention;
FIG. 18 shows a syntax of a service descriptor from among descriptors of SDT information, and a table of service type information of the service descriptor, according to an embodiment of the present invention;
FIG. 19 shows a syntax of a service list descriptor from among descriptors of BAT information and NIT information, and a table of service type information of the service list descriptor, according to an embodiment of the present invention;
FIGS. 20 and 21 are diagrams showing a relationship between 2D content and 3D content in service units, and a relationship between 2D content and 3D content in event units, according to an embodiment of the present invention;
FIG. 22 is a diagram showing 2D/3D content link information in service units according to a relationship between 2D service and 3D service, according to an embodiment of the present invention;
FIG. 23 is a diagram showing 2D/3D content link information in event units according to a relationship between a 2D event and a 3D event, according to an embodiment of the present invention;
FIG. 24 shows an EPG screen on which 3D content is displayed by using 2D/3D content identification information or 2D/3D content link information, according to an embodiment of the present invention;
FIG. 25 is a diagram showing an EPG screen, which supports channel hopping between 3D channels configured by using the 2D/3D content identification information or the 2D/3D content link information, and a general EPG screen, according to an embodiment of the present invention;
FIG. 26 is a diagram showing an EPG screen of 3D channels, which is configured based on 2D/3D content link information inserted into NIT information, according to an embodiment of the present invention;
FIG. 27 is a diagram for describing a method of performing channel hopping between 3D channels by using 2D/3D content identification information or 2D/3D content link information that is inserted as a descriptor of BAT information, according to an embodiment of the present invention;
FIG. 28 is a flowchart for describing a method of determining a linked channel for transmitting 3D content of a digital broadcasting content transmitting apparatus, according to an embodiment of the present invention;
FIG. 29 is a diagram showing a structure of a vestigial side band (VSB) data field synchronization signal according to the ATSC format, according to an embodiment of the present invention;
FIG. 30 is a diagram showing a structure of transmission parameter signaling (TPS) information according to the DVB format, according to an embodiment of the present invention;
FIG. 31 is a diagram showing a structure of L1 signaling data according to the DVB format, according to an embodiment of the present invention;
FIGS. 32 and 33 are diagrams showing signaling fields of L1 pre-signaling data and L1 post-signaling data, according to an embodiment of the present invention;
FIGS. 34 and 35 are diagrams for describing a case where a linked channel is adjacent to a current channel and a case where the linked channel is not adjacent to the current channel, respectively, according to an embodiment of the present invention;
FIG. 36 is a flowchart for describing a method of transmitting digital broadcasting content, according to an embodiment of the present invention; and
FIG. 37 is a flowchart for describing a method of receiving digital broadcasting content, according to an embodiment of the present invention.

### BEST MODE

According to an aspect of the present invention, there is provided a method of transmitting digital broadcasting content for providing 2D content or 3D content, the method including: encoding content including at least one from among the 2D content and the 3D content and generating an elementary stream including encoded data of the content; generating service additional information including electronic program guide (EPG) information of the digital broadcasting content, and inserting at least one, into the service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and multiplexing the elementary stream and the service additional information and then generating a transport stream.

The generating of the service additional information may include: determining at least one from among the 2D/3D content identification information regarding current content in service units or event units of the digital broadcasting content, the 2D/3D content link information, and the EPG 3D reproduction information; and inserting the determined information into the service additional information.

The method of transmitting digital broadcasting content may further include determining a linked channel for transmitting linked 3D content linked to the current content transmitted via a current channel, wherein the generating of the service additional information may include inserting 3D channel bonding information representing information regarding a bonding relationship between the current channel and the linked channel into the service additional information.

According to an aspect of the present invention, there is also provided a method of receiving digital broadcasting content for providing 2D content or 3D content, the method including: demultiplexing an elementary stream including encoded data of content including at least one from among the 2D content and the 3D content and service additional information regarding the digital broadcasting content from a received transport stream; extracting, from the service additional information, electronic program guide (EPG) information for constituting an EPG screen of the digital broadcasting content, and at least one from among 2D/3D content identification information representing a method of reproducing the 2D content or the 3D content, 2D/3D content link information representing a relationship between the 2D content and the 3D content, and EPG 3D reproduction information for reproducing the EPG screen in 3D; restoring the content by extracting the encoded data of the content and decoding the extracted data; and reproducing the restored content and the EPG screen in 2D or 3D based on at least one from among the 2D/3D content identification information, the 2D/3D content link information, and the EPG 3D reproduction information.

The extracting from the service additional information may include extracting at least one, from the service additional information, from among the 2D/3D content identification information regarding current content in service units or event units of the digital broadcasting content, the 2D/3D content link information, and the EPG 3D reproduction information, wherein the reproducing of the restored content and the EPG screen may include displaying on the EPG screen whether the current content is the 2D content or the 3D content based on at least one from among the 2D/3D content identification information, the 2D/3D content link information, and the EPG 3D reproduction information.

The method of receiving digital broadcasting content may further include extracting 3D channel bonding information, from the service additional information, representing information regarding a bonding relationship between a linked channel, for transmitting linked 3D content linked to current content transmitted via the current channel, and the current channel; and detecting the linked channel based on the 3D channel bonding information.

According to an aspect of the present invention, there is also provided a digital broadcasting content transmitting apparatus for providing 2D content or 3D content, the apparatus including: an elementary stream generating unit for encoding content including at least one from among the 2D content and the 3D content and generating an elementary stream including encoded data of the content; a service additional information generating unit for generating service additional information including electronic program guide (EPG) information of the digital broadcasting content, and inserting at least one, into service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and a transport stream generating unit for multiplexing the elementary stream and the service additional information and then generating a transport stream.

The digital broadcasting content transmitting apparatus may determine a linked channel for transmitting linked 3D content linked to the current content transmitted via a current channel, and the service additional information generating unit may insert 3D channel bonding information representing information regarding a bonding relationship between the current channel and the linked channel into the service additional information.

According to an aspect of the present invention, there is also provided a digital broadcasting content receiving apparatus for providing 2D content or 3D content, the apparatus including: a transport stream demultiplexer for demultiplexing an elementary stream including encoded data of content including at least one from among the 2D content and the 3D content and service additional information regarding the digital broadcasting content from a received transport stream; a service additional information extracting unit for extracting, from the service additional information, electronic program guide (EPG) information for constituting an EPG screen of the digital broadcasting content, and at least one from among 2D/3D content identification information representing a method of reproducing the 2D content or the 3D content, 2D/3D content link information representing a relationship between the 2D content and the 3D content, and EPG 3D reproduction information for reproducing the EPG screen in 3D; a content restoring unit for restoring the content by extracting the encoded data of the content and decoding the extracted data; and a reproducing unit for reproducing the restored content and the EPG screen in 2D or 3D based on at least one from among the 2D/3D content identification information, the 2D/3D content link information, and the EPG 3D reproduction information.

The service additional information extracting unit may extract 3D channel bonding information, from the service additional information, representing information regarding a bonding relationship between a linked channel, for transmitting linked 3D content linked to current content transmitted via the current channel, and the current channel, and the reproducing unit may detect the linked channel based on the 3D channel bonding information and reproduce the linked channel and the current content.

According to an aspect of the present invention, there is also provided a digital broadcasting content transmitting apparatus for providing 2D content or 3D content, the apparatus including: an elementary stream generating unit for encoding content including at least one from among the 2D content and the 3D content and generating an elementary stream including encoded data of the content; a service additional information generating unit for determining a linked channel for transmitting linked 3D content linked to the current content transmitted via a current channel and inserting 3D channel bonding information representing information regarding a bonding relationship between the current channel and the linked channel into the service additional information; and a transport stream generating unit for multiplexing the elementary stream and the service additional information and then generating a transport stream, and transmitting the transport stram via the current channel and the linked channel.

According to an aspect of the present invention, there is also provided a digital broadcasting content receiving apparatus for providing 2D content or 3D content, the apparatus including: a transport stream demultiplexer for demultiplexing an elementary stream including encoded data of content including at least one from among the 2D content and the 3D content and service additional information regarding the digital broadcasting content from a received transport stream; a service additional information extracting unit for extracting 3D channel bonding information, from the service additional information, representing information regarding a bonding relationship between a linked channel, for transmitting linked 3D content linked to current content transmitted via the current channel, and the current channel; a content restoring unit for restoring the content by extracting the encoded data of the content and decoding the extracted data; and a reproducing unit for detecting the linked channel based on the 3D channel bonding information and reproduce the linked channel and the current content.

According to an aspect of the present invention, there is also provided a computer-readable recording medium having embodied thereon a computer program for executing the method of transmitting digital broadcasting content.

According to an aspect of the present invention, there is also provided a computer-readable recording medium having embodied thereon a computer program for executing the method of receiving digital broadcasting content.

### MODE FOR INVENTION

Hereinafter, various embodiments of a method and apparatus for transmitting digital broadcasting content providing 2-dimensional (2D) content and 3-dimensional (3D) content, and various embodiments of a method and apparatus for receiving and reproducing digital broadcasting content will be described in detail.

First, terminologies used in a digital broadcasting system will be described.

A single network is a set of transport streams that are multiplexed and transmitted by a single stream transmission system. For example, a set of all digital channels in a specific cable broadcasting system may be referred to as a single network.

A service unit in the digital broadcasting system refers to a channel corresponding to a predetermined frequency band in which digital broadcasting content is transmitted.

An event unit in the digital broadcasting system refers to an individual broadcasting program.

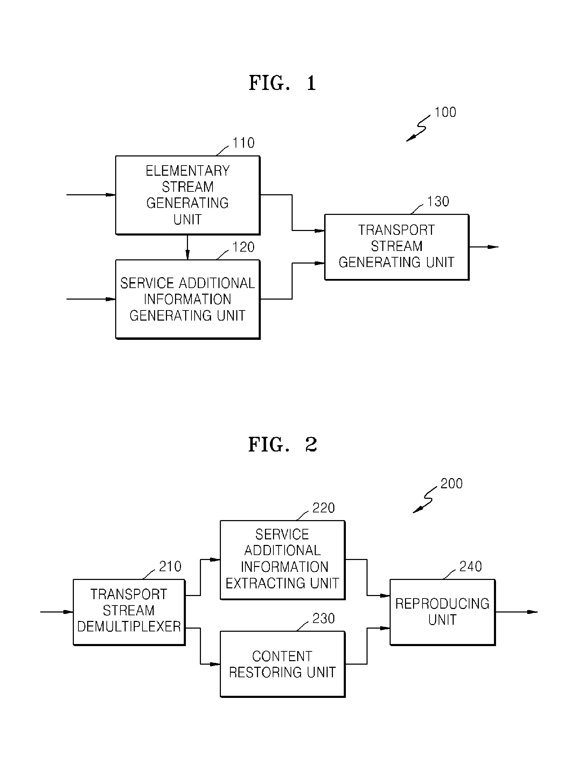

FIG. 1 is a block diagram of a digital broadcasting content transmitting apparatus 100 according to an embodiment of the present invention.

The digital broadcasting content transmitting apparatus 100 includes an elementary stream generating unit 110, a service additional information generating unit 120, and a transport stream generating unit 130. The digital broadcasting content transmitting apparatus 100 may generate a transport stream of the digital broadcasting content providing 2D content or 3D content and transmits the transport stream via a channel. The 2D content or the 3D content transmitted by the digital broadcasting content transmitting apparatus 100 may include at least one among a video component, an audio component, and a data component.

The elementary stream generating unit 110 may encode content including at least one among the 2D content or the 3D content and generates an elementary stream including encoded data of the content.

The service additional information generating unit 120 may determine 3D content service additional information needed to smoothly reproduce 3D broadcasting content.

The service additional information generating unit 120 may determine, as additional information for sending and receiving the 3D broadcasting content, at least one among '2D/3D content identification information' for displaying a reproducing method of the 2D content or the 3D content in electronic program guide (EPG) information of the digital broadcasting content, '2D/3D content link information' representing a relationship between the 2D content and the 3D content, 'EPG 3D reproduction information' for reproducing an EPG screen in 3D, and '3D channel bonding information' representing information regarding a channel bonding relationship between a current channel through which current content is transmitted and a linked channel for transmitting linked 3D content linked to the current content.

The service additional information generating unit 120 may generate service additional information including additional information and detailed information regarding the digital broadcasting content. For example, if the digital broadcasting system is based on an advanced television systems committee (ATSC) format, the service additional information generating unit 120 may generate program and system information protocol (PSIP) information. If the digital broadcasting system is based on a digital video broadcasting (DVB) format, the service additional information generating unit 120 may generate service information (SI).

The service additional information generating unit 120 may generate service additional information including the additional information for sending and receiving the 3D broadcasting content in order to support a receiving end of the digital broadcasting content to reproduce 3D content.

The service additional information generating unit 120 may determine the 2D/3D content identification information regarding the current content in service units or event units of the digital broadcasting content, and may transmit the 2D/3D content identification information in service units or event units by using the service additional information.

The 2D/3D content identification information may represent whether content according to current services or current events is one among 2D content, 2D/3D mixed content, 3D content and 3D content additional configuration information. The 3D content additional configuration information may include, to change 2D content into 3D content, at least one among depth/disparity map information, binocular parallax information, additional-view video data, a combination of the additional-view video data and the depth/disparity map information, and a combination of the additional-view video data and the binocular parallax information.

The service additional information generating unit 120 may insert at least one among 2D/3D content identification information, 2D/3D content link information, EPG 3D reproduction information, and 3D channel bonding information into information including EPG information constituting the EPG screen of PSIP information according to the ATSC format or SI information according to the DVB format.

The service additional information generating unit 120 may transmit 2D/3D content identification information, when the digital broadcasting content is provided according to an ATSC format, by using virtual channel table (VCT) information of PSIP information.

For example, the service additional information generating unit 120 may additionally allocate 3D content service information to service type information of the VCT information. Also, the service additional information generating unit 120 may determine a descriptor including the 2D/3D content identification information and may insert the descriptor into a descriptor field regarding service of the VCT information.

The service additional information generating unit 120 may insert the 2D/3D content identification information, when the digital broadcasting content is provided according to a DVB format, into at least one among service description table (SDT) information and event information table (EIT) information of the SI information.

For example, the service additional information generating unit 120 may insert the 2D/3D content identification information into reserved field of the SDT information. Also, the service additional information generating unit 120 may determine the descriptor including the 2D/3D content identification information and may insert the descriptor into a descriptor field regarding the current service unit of the SDT information.

For example, the service additional information generating unit 120 may determine the descriptor including the 2D/3D content identification information and may insert the descriptor into a descriptor field regarding the current event unit of the EIT information.

The service additional information generating unit 120 may additionally allocate 3D content type information to at least one among component type information of a component descriptor and stream content information of the SDT information or the EIT information. Alternatively, the 2D/3D content identification information may be inserted into reserved field of the component descriptor of the SDT information or the EIT information. Also, the service additional information generating unit 120 may additionally allocate the 3D content type information to content genre information of the SDT information or the EIT information.

The service additional information generating unit 120 may determine the 2D/3D content link information regarding the current content in service units or event units of the digital broadcasting content and may transmit the 2D/3D content link information in service units or event units by using the service additional information.

The 2D/3D content link information may include information regarding linked 3D content linked to the current content.

The information regarding linked 3D content may include at least one among information regarding whether the linked 3D content of the current content exists in a current stream, information regarding whether 2D content and 3D content are simultaneously transmitted, information regarding whether the linked 3D content is independent 3D content data or the 3D content additional configuration information, and 3D content format information of the linked 3D content.

The information regarding linked 3D content may include information regarding a transmission method of the linked 3D content. The information regarding a transmission method of the linked 3D content may represent that the linked 3D content is transmitted via one among the same channel, different channels, and a link between download service and non-real time (NRT) service.

The service additional information generating unit 120 may insert, when the digital broadcasting content is provided according to the ATSC format, the 2D/3D content link information into the VCT information of the PSIP information. For example, the service additional information generating unit 120 may insert the 2D/3D content link information into the reserved field of the VCT information. Also, the service additional information generating unit 120 may determine a descriptor including the 2D/3D content link information and may insert the descriptor into a descriptor field regarding service of the VCT information.

The service additional information generating unit 120 may transmit, when the digital broadcasting content is provided according to the DVB format, the 2D/3D content link information by using at least one among the SDT information, the EIT information, bouquet association table (BAT) information, and network information table (NIT) information of the SI information.

The service additional information generating unit 120 may determine the descriptor including the 2D/3D content link information and may insert the descriptor into a descriptor field regarding service of the SDT information.

The service additional information generating unit 120 may additionally allocate a 3D content service type to service type information in a service list descriptor of the BAT information or the NIT information. The service additional information generating unit 120 may determine the descriptor including the 2D/3D content link information and may insert the descriptor into a descriptor field regarding service of the BAT information or NIT information for a content in the 3D content service type. Also, the service additional information generating unit 120 may insert the 2D/3D content link information into a descriptor field regarding a content relationship between the BAT information and the NIT information.

The service additional information generating unit 120 may determine EPG 3D reproduction information regarding the current content and may transmit the determined EPG 3D reproduction information in channel units, network units, service units, or event units of the digital broadcasting content by using the service additional information.

The EPG 3D reproduction information may include at least one among information regarding a position of the EPG screen in a left-view image and a right-view image and information regarding whether the current content is reproduced in 2D when reproducing the EPG screen in 3D.

In the left-view image and the right-view image, the information regarding a position of the EPG screen may include at least one among a coordinate, movement from an original position, depth information, and disparity map information of the EPG screen in the left-view image and the right-view image.

The service additional information generating unit 120 may determine, when the digital broadcasting content is provided according to the ATSC format, a descriptor including EPG 3D reproduction information and may insert the determined descriptor into a description field of at least one information among the VCT information, the EIT information, rating region table (RRT) information, and system time table (STT) information of the PSIP information.

Also, the service additional information generating unit 120 may transmit the EPG 3D reproduction information included in the VCT information or the EIT information linked to extended text table (ETT) information by using identification information of an extended text message of the ETT information of the PSIP information.

The service additional information generating unit 120 may insert, when the digital broadcasting content is provided according to the DVB format, a descriptor including the EPG 3D reproduction information into a descriptor field of at least one piece of information among the NIT information, the SDT information, and the EIT information of the SI information.

The digital broadcasting content transmitting apparatus 100 may determine the linked channel for transmitting the linked 3D content linked to the current content transmitted via the current channel. In this case, the service additional information generating unit 120 may transmit the 3D channel bonding information regarding the bonding relationship between the current channel and the linked channel by using the service additional information.

The 3D channel bonding information may include at least one among information representing whether to use a plurality of channels coupled to one another, information representing whether the current channel is a main channel or an additional channel, information regarding a magnitude of a bandwidth, information representing whether the linked channel is adjacent to the current channel, and information representing a position of the linked channel.

If the linked channel is adjacent to the current channel, the 3D channel bonding information may represent whether the information representing a position of the linked channel is a previous channel or next channel. If the linked channel is not adjacent to the current channel, the information representing a position of the linked channel may represent a frequency value of the linked channel.

When the digital broadcasting content is provided according to the ATSC format, the service additional information generating unit 120 may insert the 3D channel bonding information into a reserved field of a current VSB data field synchronization signal.

When the digital broadcasting content is provided according to the DVB format, the service additional information generating unit 120 may insert the 3D channel bonding information into at least one among a reserved field of current TPS information and a reserved field of L1 signaling data.

Also, when the digital broadcasting content is provided according to the ATSC format, the service additional information generating unit 120 may determine a descriptor including the 3D channel bonding information and insert the determined descriptor into a descriptor field of program map table (PMT) information or the VCT information.

Also, when the digital broadcasting content is provided according to the DVB format, the service additional information generating unit 120 may additionally allocate a channel bonding service type to linkage type information of the NIT information or to the service type information of the SDT information. In this case, the service additional information generating unit 120 may insert the descriptor including the 3D channel bonding information into a descriptor field of the NIT information or the SDT information.

The transport stream generating unit 130 generates the elementary stream generated by the elementary stream generating unit 110 and the transport stream by multiplexing the service additional information generated by the service additional information generating unit 120. The transport stream generating unit 130 may generate a packetized elementary stream (PES) packet by packetizing the elementary stream, and may generate the transport stream by multiplexing the PES packet and the service additional information. The transport stream that is output by the transport stream generating unit 130 may be transmitted via a channel.

FIG. 2 is a block diagram of a digital broadcasting content receiving apparatus 200, according to an embodiment of the present invention.

The digital broadcasting content receiving apparatus 200 includes a transport stream demultiplexer 210, a service additional information extracting unit 220, a content restoring unit 230, and a reproducing unit 240. The digital broadcasting content receiving apparatus 200 may receive the transport stream of the digital broadcasting content for providing the 2D content or 3D content, and may restore content including at least one among the 2D content or 3D content and reproduce the restored content in 2D or 3D according to a reproducing method.

The transport stream demultiplexer 210 receives the transport stream and demultiplexes the elementary stream and the service additional information regarding the digital broadcasting content from the transport stream. The elementary stream includes encoded data of the content provided through the digital broadcasting content. The transport stream demultiplexer 210 may demultiplex the transport stream and output the PES packets and the service additional information. The transport stream demultiplexer 210 may output the elementary stream by demultiplexing the PES packets.

The service additional information extracting unit 220 may extract at least one among the 2D/3D content identification information, the 2D/3D content link information, and the EPG 3D reproduction information to be displayed on the EPG screen, from the service additional information output from the transport stream demultiplexer 210. The 2D/3D content identification information, the 2D/3D content link information, and the EPG 3D reproduction information correspond to a plurality of pieces of information determined and transmitted by the digital broadcasting content transmitting apparatus 100.

The service additional information extracting unit 220 may extract at least one among the 2D/3D content identification information, the 2D/3D content link information, the EPG 3D reproduction information, and the 3D channel bonding information, from information including the EPG information constituting the EPG screen of the PSIP information according to the ATSC format or the SI information according to the DVB format.

The content restoring unit 230 may extract and decode the encoded data of the content from the elementary stream that is output from the transport stream demultiplexer 210, and may restore content provided through the digital broadcasting content. The content restoring unit 230 may restore at least one among the 2D content and 3D content. The reproducing unit 240 may reproduce the restored content in 2D or 3D based on at least one among the 2D/3D content identification information, the 2D/3D content link information, and the EPG 3D reproduction information that are extracted by the service additional information extracting unit 220.

The reproducing unit 240 may search for 3D content information linked to reproduce the current content in 3D and reproduce the current content in 3D based on at least one among the 2D/3D content identification information and the 2D/3D content link information.

The content restoring unit 230 may restore a left-view image sequence and a right-view image sequence of 3D content by using 3D content format information of the 2D/3D content identification information and 2D/3D content link information that are extracted by the service additional information extracting unit 220.

The service additional information extracting unit 220 may extract, from the service additional information, the 2D/3D content identification information regarding the current content in service units or event units of the digital broadcasting content. In this case, the reproducing unit 240 may display, on the EPG screen, whether the current content is 2D content or 3D content based on the 2D/3D content identification information.

The reproducing unit 240 may determine a reproduction method of the current content, based on the 2D/3D content identification information, by reading which, among the 2D content, the 2D/3D mixed content, the 3D content and the 3D content additional configuration information, the content according to current services or current events is. The 3D content additional configuration information may include at least one of the depth/disparity map information, the binocular parallax information, the additional-view video data, the combination of the additional-view video data and the depth/disparity map information, and the combination of the additional-view video data and the binocular parallax information.

The service additional information extracting unit 220 may extract, when the digital broadcasting content is provided according to the ATSC format, the 2D/3D content identification information from the VCT information of the PSIP information. The service additional information extracting unit 220 may read the 3D content service type from the service type information of the VCT information. A descriptor including the 2D/3D content identification information may be extracted from the descriptor field regarding service of the VCT information.

The service additional information extracting unit 220 may extract, when the digital broadcasting content is provided according to the DVB format, the 2D/3D content identification information from at least one among the SDT information and the EIT information of the SI information.

The service additional information extracting unit 220 may extract the 2D/3D content identification information from the reserved field of the SDT information. Also, the descriptor including the 2D/3D content identification information may be extracted from the descriptor field regarding the current service unit of the SDT information. The service additional information extracting unit 220 may extract a descriptor including the 2D/3D content identification information from the descriptor field regarding the current event unit of the EIT information.

Also, the service additional information extracting unit 220 may determine the 3D content service information from at least one among the component type information of the component descriptor and the stream content information of the SDT information or the EIT information. The service additional information extracting unit 220 may extract the 2D/3D content identification information from the reserved field of the component descriptor of the SDT information or the EIT information. Alternatively, the 3D content service information may be read from the content genre information of the SDT information or the EIT information.

The reproducing unit 240 may read the 2D/3D content identification information to determine whether broadcasting content is 2D content or 3D content according to at least one among service units and event units, and may display a reproduction method of the broadcasting content on the EPG screen.

The service additional information extracting unit 220 may extract, from the service additional information, the 2D/3D content link information regarding the current content in service units or event units of the digital broadcasting content. The reproducing unit 240 may detect the linked 3D content linked to the current content based on the 2D/3D content link information, and may reproduce the linked 3D content linked to the current content in 3D.

The reproducing unit 240 may read information regarding the linked 3D content linked to the current content of the 2D/3D content link information and detect the linked 3D content. From the information regarding the linked 3D content, at least one of the information regarding whether the linked 3D content exists in the current stream, the information regarding whether 2D content and 3D content are simultaneously transmitted, the information regarding whether the linked 3D content is 3D content data or the 3D content additional configuration information, and the 3D content format information of the linked 3D content, is read, and the read information may be used to detect the linked 3D content.

The reproducing unit 240 may read information regarding a transmission method of the linked 3D content from the information regarding the linked 3D content. Based on the information regarding a transmission method of the linked 3D content, it may be determined that the linked 3D content is transmitted via one among the same channel, different channels, and a link between download service and NRT service.

The service additional information extracting unit 220 may extract, when the digital broadcasting content is provided according to the ATSC format, the 2D/3D content link information from the VCT information of the PSIP information. For example, the 2D/3D content link information may be extracted from the reserved field of the VCT information. Alternatively, the descriptor including the 2D/3D content link information may be extracted from the descriptor field regarding service of the VCT information.

The service additional information extracting unit 220 may extract, when the digital broadcasting content is provided according to the DVB format, the 2D/3D content link information from at least one among the SDT information, the EIT information, the BAT information, and the NIT information

For example, the descriptor including the 2D/3D content link information may be extracted from the descriptor field regarding service of the SDT information or the EIT information.

The service additional information extracting unit 220 may read the 3D content service type from the service type information of the service list descriptor of the BAT information or the NIT information.

The service additional information extracting unit 220 may extract, if it is read that a current service type is the 3D content service type from the service list descriptor, a descriptor including the 2D/3D content link information from the descriptor field regarding service of the SDT information or the EIT information. Also, the service additional information extracting unit 220 may extract the 2D/3D content link information from a descriptor field regarding a relationship between contents of the BAT information or the NIT information.

Since identification information regarding the current content or identification information regarding linkage content may be extracted from the 2D/3D content link information, a reproduction method of the current content may be displayed on the EPG screen. Also, an EPG screen only for a 3D channel formed of only a 3D channel may be configured based on identification information regarding content.

The service additional information extracting unit 220 may extract, from the service additional information, the EPG 3D reproduction information regarding the current content in channel units, network units, service units, or event units of the digital broadcasting content. The reproducing unit 240 may reproduce the EPG screen in 3D based on the EPG 3D reproduction information.

The reproducing unit 240 may read at least one among the information representing a position of the EPG screen in the left-view image and the right-view image and the information regarding whether the current content is reproduced in 2D when reproducing the EPG screen in 3D. The information representing a position of the EPG screen may include at least one among the coordinate, the movement from an original position, the depth information, and the disparity map information of the EPG screen in the left-view image and the right-view image.

The reproducing unit 240 may display the EPG screen on the left-view image and the right-view image based on the information representing a position of the EPG screen in the left-view image and the right-view image.

The service additional information extracting unit 220 may extract, when the digital broadcasting content is provided according to the ATSC format, the descriptor including the EPG 3D reproduction information from the descriptor field of at least one piece of information among the VCT information, the EIT information, the RRT information, and the STT information. Also, the service additional information extracting unit 220 may extract, based on identification information of an enhanced text message of the ETT information of the PSIP information, the descriptor including the EPG 3D reproduction information of the VCT information or EIT information linked to the ETT information.

The service additional information extracting unit 220 may extract, when the digital broadcasting content is provided according to the DVB format, the descriptor including the EPG 3D reproduction information from the descriptor field of at least one piece of information among the NIT information, the SDT information, and the EIT information of the SI information.

The digital broadcasting content receiving apparatus 200 may extract the 3D channel bonding information regarding the relationship between the current channel and the linked channel from the service additional information, and may detect the linked channel based on the 3D channel bonding information.

The service additional information extracting unit 220 may extract, from the 3D channel bonding information, at least one among the information representing whether to use a plurality of channels coupled to one another, the information representing whether the current channel is a main channel or an additional channel, the information regarding a magnitude of a bandwidth, the information representing whether the linked channel is adjacent to the current channel, and the information representing a position of the linked channel.

If the linked channel is adjacent to the current channel based on the information representing a position of the linked channel, the digital broadcasting content receiving apparatus 200 may determine the linked channel to be a previous channel or next channel of the current channel. Also, if the linked channel is not adjacent to the current channel based on the information representing a position of the linked channel, the digital broadcasting content receiving apparatus 200 may determine the linked channel by reading a frequency value of the linked channel.

When the digital broadcasting content is provided according to the ATSC format, the service additional information extracting unit 220 may extract the 3D channel bonding information from reserved field of a field synchronization signal of a current data segment.

When the digital broadcasting content is provided according to the DVB format, the service additional information extracting unit 220 may extract the 3D channel bonding information from at least one among the reserved field of current TPS information and the reserved field of L1 signaling data.

Also, when the digital broadcasting content is provided according to the ATSC format, the service additional information extracting unit 220 may extract the descriptor including the 3D channel bonding information from the descriptor field of the PMT information and VCT information. Also, when the digital broadcasting content is provided according to the DVB format, the service additional information extracting unit 220 may read the channel bonding service from the linkage type information of the NIT information or from the service type information of the SDT information, and may extract the descriptor including the 3D channel bonding information from the descriptor field of the NIT information or the SDT information.

The digital broadcasting content receiving apparatus 200 may search for the linked 3D content via the linked channel from among the restored contents, based on the 3D channel bonding information extracted by the service additional information extracting unit 220, and may simultaneously reproduce the current content of the current channel and the linked 3D content in 3D.

Alternatively, the digital broadcasting content receiving apparatus 200 may search for the linked channel based on the 3D channel bonding information, receive only the transport stream transmitted via the linked channel, restore the linked 3D content, and reproduce both the linked 3D content and the current content in 3D.

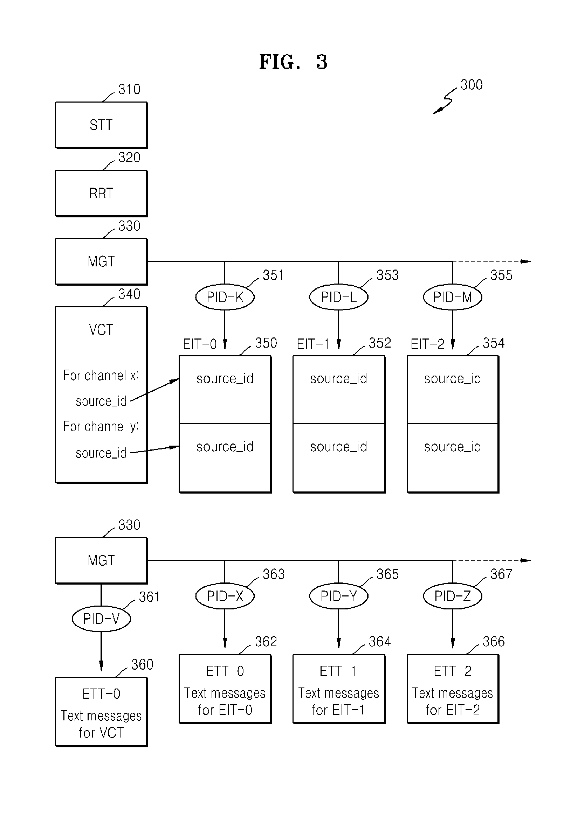

FIG. 3 is a diagram showing a hierarchical structure 300 of PSIP information according to the ATSC format, according to an embodiment of the present invention.

The PSIP information according to the ATSC format includes STT information 310, RRT information 320, MGT information 330, VCT information 340, EIT information 350, 352, and 354, and ETT information 360, 362, 364, and 366.

The STT information 310 includes information regarding a current data and time. The RRT information 320 includes information regarding a regional broadcasting rating of a broadcasting program. The MGT information 330 includes versions and sizes of a plurality of pieces of other table information, and packet identifier (PID) information, except for the STT information 310.

The VCT information 340 includes information regarding channels to be transmitted. For example, channel tuning information, such as a channel number, a channel name, a carrier frequency, and a program number, is provided via the VCT information 340. The VCT information 340 is referred to as terrestrial virtual channel table (TVCT) information and cable virtual channel table (CVCT) information in a terrestrial digital broadcasting system and a cable digital broadcasting system, respectively.

The EIT information 350, 352, and 354 includes simple information regarding an event, that is, a broadcasting program. For example, information, such as an event (broadcasting program) name or a broadcasting time, is provided via the EIT information 350, 352, and 354.

The ETT information 360, 362, 364, and 366 includes additional text information regarding an event. Text messages, except for the information regarding channels, which are provided by using the VCT information 340 and the EIT information 350, 352, and 354, and the information regarding an event, may be provided via the ETT information 360, 362, 364, and 366.

The STT information 310, the RRT information 320, the MGT information 330, and the VCT information 340 are transmitted via a transmission packet having a PID information value of 0x1 FFB as default. The STT information 310, the RRT information 320, the MGT information 330, and the VCT information 340 may be identified by table ID information.

Since the MGT information 330 includes PID information 351, 353, and 355 of the EIT information 350, 352, and 354 and PID information 361, 363, 365, and 367 of the ETT information 360, 362, 364, and 366, a transmission packet including the EIT information 350, 352, and 354 and the ETT information 360, 362, 364, and 366 may be searched for by using the MGT information 330.

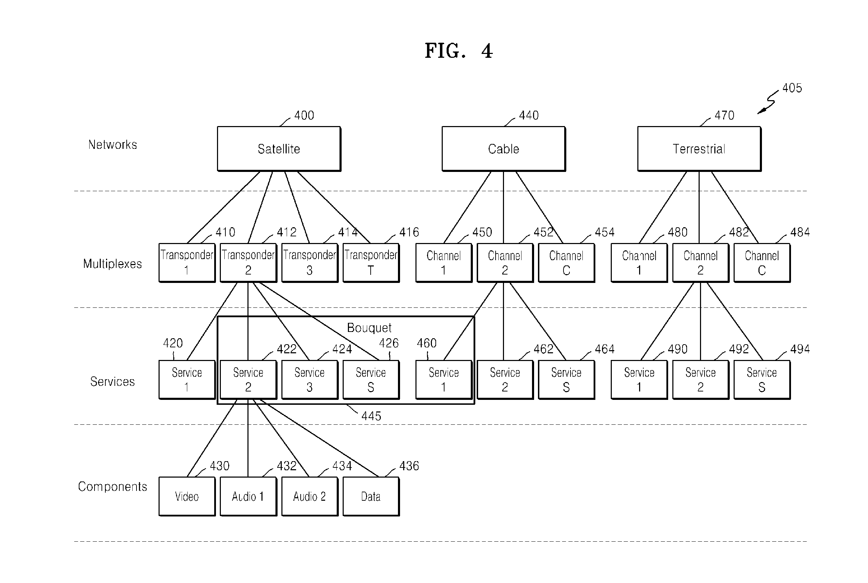

FIG. 4 is a diagram showing a structure 405 with which digital broadcasting content is transmitted according to the DVB format, according to an embodiment of the present invention.

The digital broadcasting content according to the DVB format includes a satellite DVB service 400, a cable DVB service 440, and a terrestrial DVB service 470 depending on network types.

Multiplexing units of DVB service include transponders 410, 412, 414, and 416 of the satellite DVB service 400, channels 450, 452, and 454 of the cable DVB service 440, and channels 480, 482, and 484 of the terrestrial DVB service 470.

One multiplexing unit may process a plurality of services. For example, in the satellite DVB service 400, a plurality of services 420, 422, 424, and 426 may be multiplexed and transmitted via one transponder 412. In the cable DVB service 440, a plurality of services 460, 462, and 464 may be multiplexed and transmitted via one channel 452. In the terrestrial DVB service 470, a plurality of services 490, 492, and 494 may be multiplexed and transmitted via one channel 482.

Since a bouquet 445 is a set of a plurality of services that are not limited to services of the same kind of network, the bouquet 445 may include the services 422, 424, 426, and 460 of the satellite DVB service 400 and the cable DVB service 440.

One service 422 includes a video component 430, audio components 432 and 434, and a data component 436. A plurality of components may be included in the service 422 according to types of components of the video component 430, the audio components 432 and 434, and the data component 436.

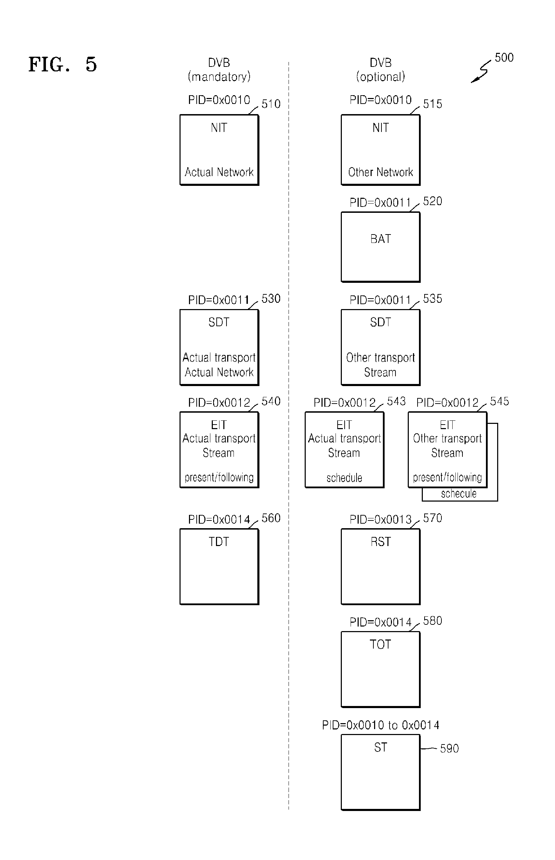

FIG. 5 is a diagram showing a hierarchical structure 500 of SI information according to the DVB format, according to an embodiment of the present invention.

The SI information according to the DVB format at least includes NIT information 510, SDT information 530, EIT information 540, and time date table (TDT) information 560. Alternatively, the SI information according to the DVB format may include NIT information 515, BAT information 520, SDT information 535, EIT information 543 and 545, running status table (RST) information 570, time offset table (TOT) information 580, and stuffing table (ST) information 590.

The NIT information 510 and 515 includes information regarding a physical configuration for multiplexing of the transport stream transmitted over a network and characteristics of the network. For example, the NIT information 510 and 515 provides information regarding a type of a current network, that is, regarding whether the current network is a terrestrial network, a cable network, or a satellite network, and information regarding a name of the network.

The SDT information 530 and 535 includes information regarding services included in the transport stream. For example, the SDT information 530 may provide information such as a service name and a provider.

The BAT information 520 provides information regarding the set of services of the bouquet.

The EIT information 540, 543, and 545 provides event information included in the services in sequence of dates. For example, information such as a name of each program, a starting time, and a broadcasting time may be provided via the EIT information 540, 543, and 545.

One network is a set of transport streams that are multiplexed and transmitted by a single stream transmitting system. For example, a set of all digital channels in a specific cable broadcasting system is referred to as one network. In a case of a terrestrial network, a network identifier 'network_id' of each network is uniquely allocated to all terrestrial broadcasting operators in one region, that is, one country.

In the digital broadcasting system, a service unit refers to a channel in a predetermined frequency band to which content of the digital broadcasting content is transmitted. In order to distinguish between services in the transport stream of the current network, the service identifier 'service_id' of each service is uniquely allocated.

In the digital broadcasting system, an event unit is referred to as an individual broadcasting program. In order to distinguish between events in the current service, an event identifier 'event_id' of each event is uniquely allocated.

In the terrestrial network, all operators in one region or one country use the same original network identifier 'original_network_id'. The original network identifier 'original_network_id' comprised of a combination of a country code 'country_code' and '0x2000' is allocated to the terrestrial operators. A receiving end may distinguish broadcasting contents received from a plurality of countries based on a network identifier.

A broadcasting station and an operator of the same region or country may distinguish the broadcasting contents by using the service identifier 'service_id' and a transport stream identifier 'transport_stream_id'.

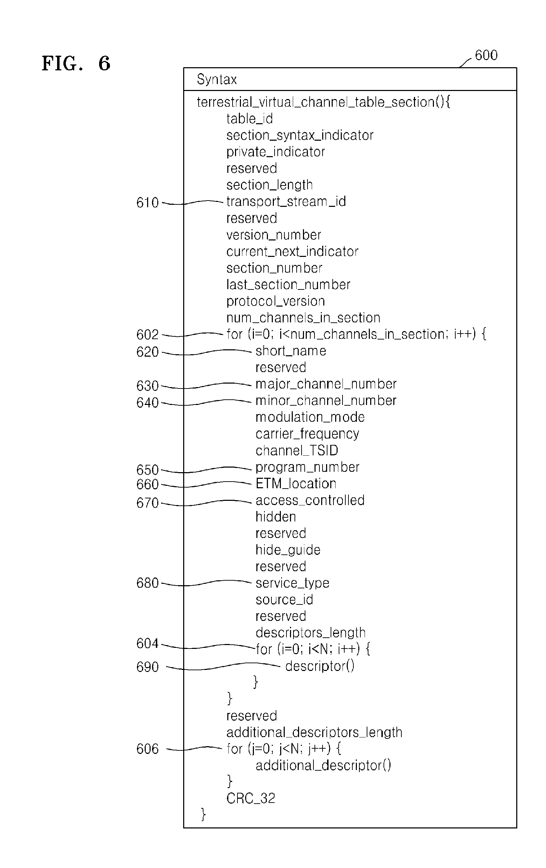

FIGS. 6 through 10 are diagrams respectively showing syntaxes of TVCT information, EIT information, ETT information, RRT information, and STT information of PSIP information according to the ATSC format, according to an embodiment of the present invention.

When the digital broadcasting content receiving apparatus 200 is based on the PSIP information, the digital broadcasting content receiving apparatus 200 may constitute the EPG screen by using TVCT information 600, EIT information 700, ETT information 800 and RRT information 900, and STT information 1000 of the PSIP information.

As basic information provided by the TVCT information 600 of FIG. 6, a 'transport_stream_id' 610 may provide the transport stream identifier of the current channel, a 'short_name' 620 may provide channel name abbreviation information, a 'major_channel_number' 630 may provide major channel number information, a 'minor_channel_number' 640 may provide additional channel number information, a 'program number' 650 may provide program number information, an 'ETM_location' 660 may provide additional text message location information, an 'access_controlled' 670 may provide an access-control flag, and a 'service type' 680 may provide service type information.

In addition to the basic information, additional information about the current channel may be provided through a descriptor field 'descriptor()' 690 of a loop included after the basic information of the TVCT information 600.

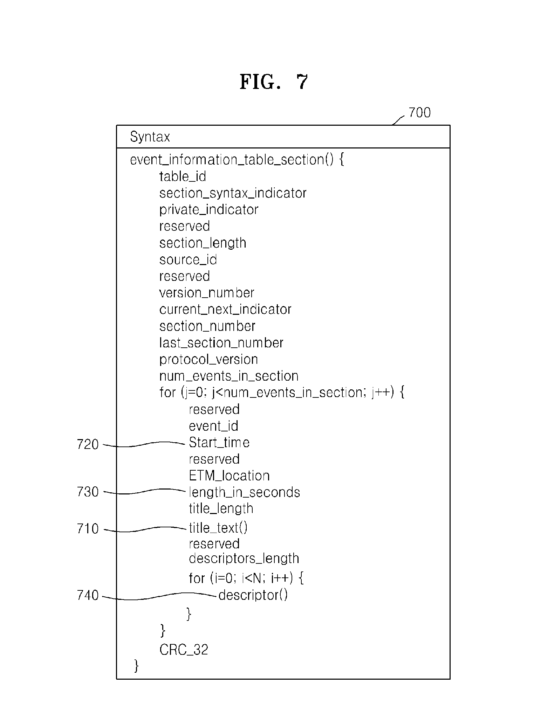

The EIT information 700 of FIG. 7 includes simple information about the current event. For example, a 'title_text()' 710 of the EIT information 700 may provide information about a name of the current event, a 'start_time' 720 may provide information about a broadcasting starting time of the current event, and a 'length_in_seconds' 730 may provide information about a broadcasting time of the current event.

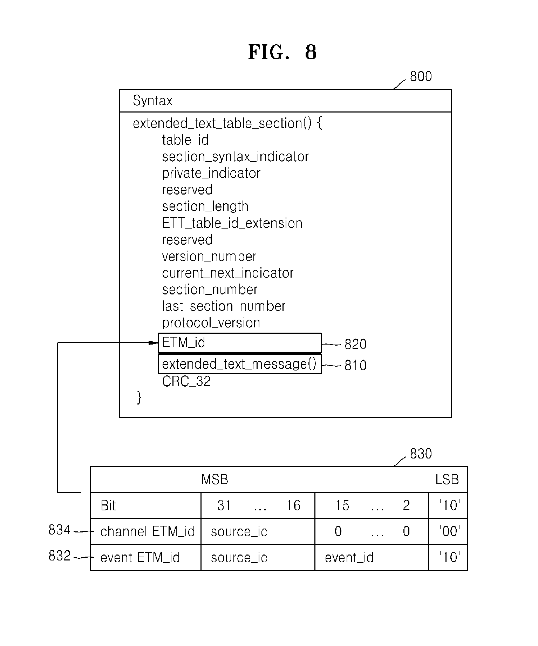

The ETT information 800 of FIG. 8 includes additional information other than the information provided by using the VCT information 600 and the EIT information 700. In particular, an 'extended_text_message()' 810 of the ETT information 800 provides text message type additional information. Also, an 'ETM_id' 820 for identifying the additional text message includes identification information 834 of the additional text message about a channel and identification information 832 of the additional text message about an event. Linkage target identification information 830 of the additional text message provides an identification information 'source_id'_of a linked channel of the additional text message about the channel, and an identification information 'event_id'_of a linkage event of the additional text message about the event.

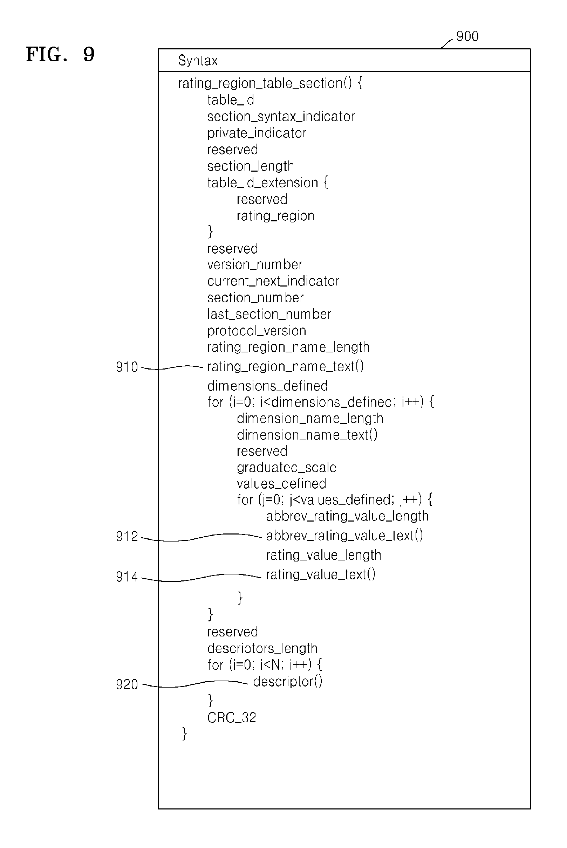

The RRT information 900 of FIG. 9 includes information regarding a regional broadcasting rating of a broadcasting program. For example, a 'rating_region_name_text()' 910 of the RRT information 900 provides information regarding a name of the regional broadcasting rating, an 'abbrev_rating_value_text()' 912 provides information regarding a abbreviation of a viewing rating for TV broadcasting, and a 'rating_value_text()' 914 provides information regarding a viewing rating value for TV broadcasting.

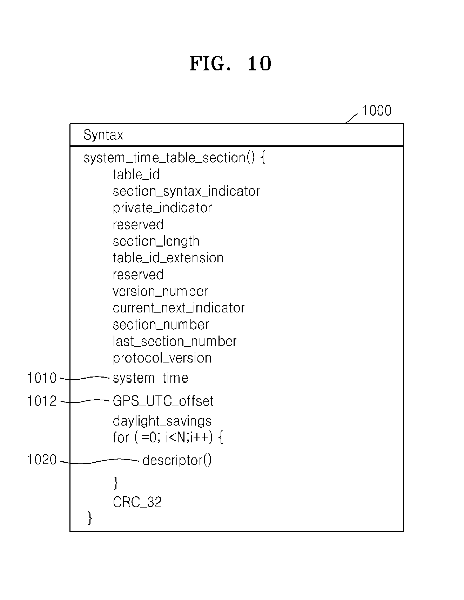

The STT information 1000 of FIG. 10 includes information regarding the current date and time. For example, a 'system_time' 1010 of the STT information 1000 provides information regarding a time of the current digital broadcasting system, and a 'GPS_UTC_offset' 1012 provides information regarding a difference between global positioning system (GPS) time and universal time coordinated (UTC).

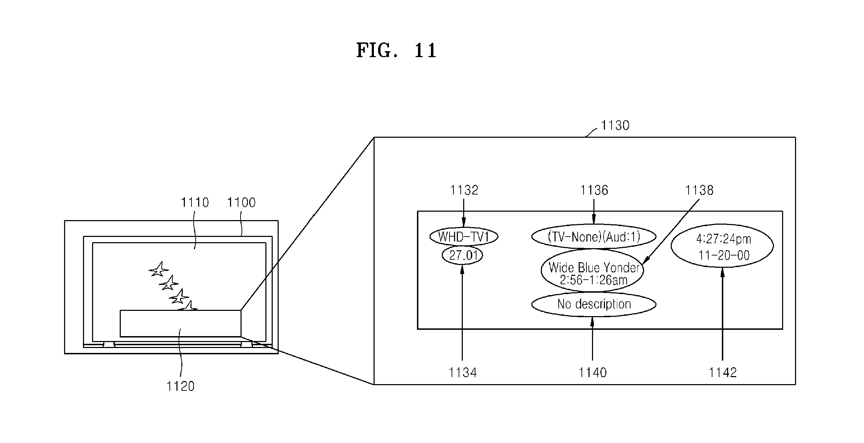

FIG. 11 is a diagram showing a screen on which the EPG screen is displayed based on the TVCT information 600, the RRT information 900, the ETT information 800, the EIT information 700, and the STT information 1000 of the PSIP information according to the ATSC format, according to an embodiment of the present invention.

On a TV 1100 receiving digital broadcasting content, an EPG screen 1120 is displayed on a screen 1110 for reproducing basic content. Channel name abbreviation information 1132, channel number information 1134, regional broadcasting rating information 1136, current event name/time information 1138, additional information 1140 regarding the current event, and time and date information 1142 of the current system are displayed on an enlarged screen 1130 of the EPG screen 1120.

The EPG screen 1120 is configured based on information included in the TVCT information 600, the EIT information 700, the ETT information 800, the RRT information 900, and the STT information 1000.

For example, the information read from the 'short channel name' 620 of the TVCT information 600 is displayed on the channel name abbreviation information 1132, and information read from the 'major_channel_number' 630 and the 'minor_channel_number' 640 of the TVCT information 600 are combined with each other and are displayed on the channel number information 1134.

Information read from the 'rating_region_name_text()' 910, the 'abbrev_rating_value_text()' 912, and the 'rating_value_text()' 914 of the RRT information 900 are combined with one another and are displayed on the regional broadcasting rating information 1136.

Information read from the 'title_text()' 710, the 'start_time' 720, and the 'length_in_seconds' 730 of the EIT information 700 are combined with one another and are displayed on the current event name/time information 1138.

Information read from the 'extended_text_message()' 810 of the ETT information 800 is displayed on the additional information 1140 regarding the current event.

Information read from the 'system_time' 1010 and the 'GPS_UTC_offset' 1012 of the STT information 1000 are combined with each other and are displayed on the time and date information 1142 of the current system.

When the digital broadcasting content transmitting apparatus 100 provides the digital broadcasting content according to the ATSC format, the 2D/3D content identification information may be provided by using the service type information 'service_type' 680 and the descriptor field 'descriptor()' 690 of the TVCT information 600 in order to display the 2D/3D content identification information, which is defined to identify whether the current content is 2D content or 3D content, on the EPG screen. Also, the 2D/3D content link information may be inserted into the descriptor field 'descriptor()' 690 of the TVCT information 600 and may be provided.

When the digital broadcasting content transmitting apparatus 100 provides the digital broadcasting content according to the ATSC format, the EPG 3D reproduction information may be transmitted by using at least one of the descriptor field 'descriptor()' 690 of the TVCT information 600, a descriptor field 'descriptor()' 740 of the EIT information 700, the 'ETM_id' 820 of the ETT information 800, a descriptor field 'descriptor()' 920 of the RRT information 900, and a descriptor field 'descriptor()' 1020 of the STT information 1000.

Also, when the digital broadcasting content transmitting apparatus 100 provides the digital broadcasting content according to the ATSC format, the 3D channel bonding information may be transmitted by using the descriptor field 'descriptor()' 690 and the service type information 'service_type' 680 of the TVCT information 600.

Also, when the digital broadcasting content receiving apparatus 200 receives the digital broadcasting content provided according to the ATSC format, the 2D/3D content identification information is detected and read from the service type information 'service_type' 680 and the descriptor field 'descriptor()' 690 of the TVCT information 600 to determine whether content is 2D or 3D content, and a reproduction method of the content may be displayed on the EPG screen.

Also, the digital broadcasting content receiving apparatus 200 may detect and read the 2D/3D content link information from the descriptor field 'descriptor()' 690 of the TVCT information 600, and may search for and reproduce the 3D content linked to the current content.

When the digital broadcasting content receiving apparatus 200 receives the digital broadcasting content provided according to the ATSC format, the EPG 3D reproduction information may be detected and read from at least one of the descriptor field 'descriptor()' 690 of the TVCT information 600, the descriptor field 'descriptor()' 740 of the EIT information 700, the 'ETM_id' 820 of the ETT information 800, the descriptor field 'descriptor()' 920 of the RRT information 900, and the descriptor field 'descriptor()' 1020 of the STT information 1000, and thus the EPG screen may be reproduced in 3D by using the EPG 3D reproduction information.

Also, when the digital broadcasting content receiving apparatus 200 provides the digital broadcasting content according to the ATSC format, the 3D channel bonding information may be detected and read from at least one of the descriptor field 'descriptor()' 690 and the service type information 'service type' 680 of the TVCT information 600, and thus contents extracted from the current channel and the linked channel may be restored and reproduced in 3D.

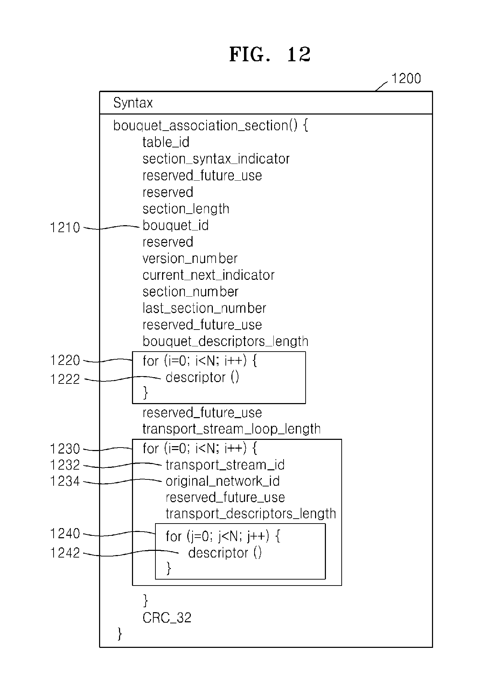

FIGS. 12 through 15 are diagrams respectively showing syntaxes of the BAT information 1200, NIT information 1300, SDT information 1400, and EIT information 1500 of the SI information according to the DVB format, according to an embodiment of the present invention.

When the digital broadcasting content receiving apparatus 200 is according to the DVB format, the EPG screen may be configured by using the NIT information 1300, the SDT information 1400, and the EIT information 1500. In detail, the digital broadcasting content receiving apparatus 200 may configure the EPG screen by using information included in at least one from among a descriptor field 'descriptor()' 1332 of the NIT information 1300 based on the DVB format, a descriptor field 'descriptor()' 1422 of the SDT information 1400, and a descriptor field 'descriptor()' 1544 of the EIT information 1500 based on the DVB format.

In the BAT information 1200 of FIG. 12, a 'bouquet_id' 1210 may provide identification information of a bouquet, a 'transport_stream_id' 1232 may provide identification information of a current transport stream, and an 'original_network_id' 1234 may provide unique identification information of a regional network which initially transmitted broadcasting service.

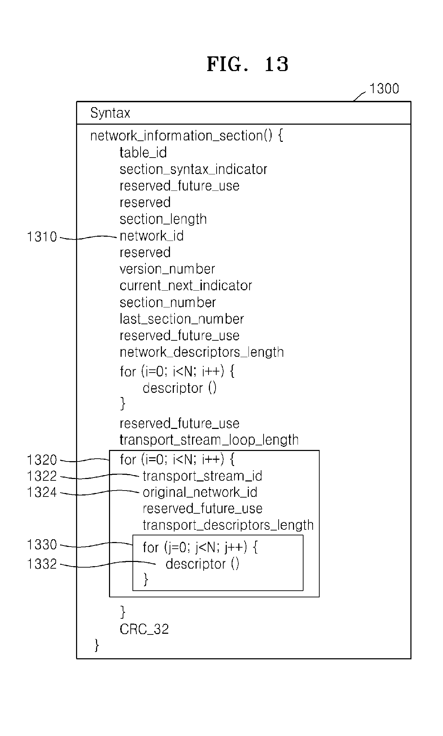

In the NIT information 1300 of FIG. 13, a 'network_id' 1310 may provide identification information of a network during transmission of the digital broadcasting content, and identification information the 'network_id' 1310 may be changed when the digital broadcasting content is retransmitted. A 'transport_stream_id' 1322 may provide identification information of a transport stream transmitted by the current network, and may provide unique identification information of a regional network which transmitted broadcasting service for the first time.

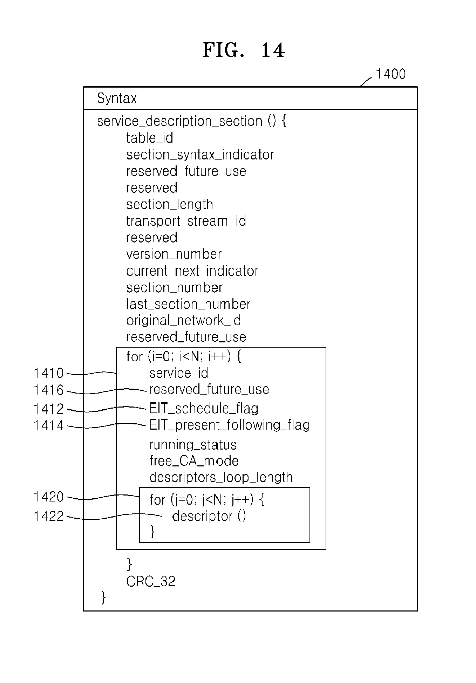

In the SDT information 1400 of FIG. 14, an 'EIT_schedule_flag' 1412 may provide information about whether EIT schedule information regarding the corresponding service transmitted by a current transport stream is provided, and an 'EIT_present_following_flag' 1414 may provide information about whether information about the current event and the next event regarding the corresponding service transmitted by the current transport stream is provided. A service information loop 1410 includes information about the corresponding service, and extended descriptors including information about services may be provided by using a descriptor field 'descriptor()' 1422.

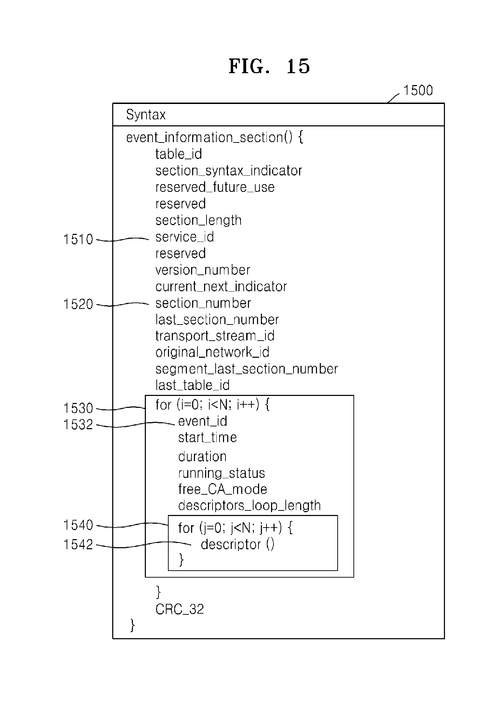

In the EIT information 1500 of FIG. 15, a 'service_id' 1510 may provide identification information regarding a service transmitted by the current transport stream, and a 'section_number' 1520 may provide identification information of sections when a current table is divided in section units. A single table may be divided for up to eight sections. An event information loop 1530 may store information about the corresponding event, and extended descriptors including information about events may be provided by using a descriptor field 'descriptor()' 1542.

When the digital broadcasting content transmitting apparatus 100 provides the digital broadcasting content according to the DVB format, the 2D/3D content identification information may be provided by using at least one from among service type information 'service_type' of a service list descriptor 'Service list descriptor' of the BAT information 1200 and the NIT information 1300, a descriptor field 'descriptor()' 1242 of the BAT information 1200, a descriptor field 'descriptor()' 1332 of the NIT information 1300, a reserved field 'reserved_future_use' 1416 and the descriptor field 'descriptor()' 1422 of the SDT information 1400, and the descriptor field 'descriptor()' 1542 of the EIT information 1500.

Also, when the digital broadcasting content transmitting apparatus 100 provides the digital broadcasting content according to the DVB format, the 2D/3D content link information may be provided by using at least one from among the descriptor field 'descriptor()' 1242 of the BAT information 1200, a descriptor field 'descriptor()' 1332 of the NIT information 1300, a linkage descriptor 'linkage descriptor' or the descriptor field 'descriptor()' 1422 of the SDT information 1400, and a linkage descriptor 'linkage descriptor' or the descriptor field 'descriptor()' 1542 of the EIT information 1500.

When the digital broadcasting content transmitting apparatus 100 provides the digital broadcasting content according to the DVB format, the EPG 3D reproduction information may be transmitted by using at least one from among the descriptor field 'descriptor()' 1332 of the NIT information 1300, the descriptor field 'descriptor()' 1422 of the SDT information 1400, and the descriptor field 'descriptor()' 1544 of the EIT information 1500 based on the DVB format.

Also, when the digital broadcasting content transmitting apparatus 100 provides the digital broadcasting content according to the DVB format, the descriptor field 'descriptor()' 1332 of the NIT information 1300, a linkage type information 'linkage_type' of the linkage descriptor 'linkage_descriptor', the descriptor field 'descriptor()' 1422 and a service type information 'service_type' of the SDT information 1400.

Also, when the digital broadcasting content receiving apparatus 200 receives the digital broadcasting content provided according to the DVB format, the 2D/3D content identification information is detected and read from at least one from among the service type information 'service_type' of the service list descriptor 'Service list descriptor' of the BAT information 1200 and the NIT information 1300, the descriptor field 'descriptor()' 1242 of the BAT information 1200, the descriptor field 'descriptor()' 1332 of the NIT information 1300, the a reserved field 'reserved_future_use' 1416 and the descriptor field 'descriptor()' 1422 of the SDT information 1400, and the descriptor field 'descriptor()' 1542 of the EIT information 1500. Then, it is determined whether the current content is 2D content or 3D content, and a 2D/3D reproduction method of content may be displayed on the EPG screen.

Also, the digital broadcasting content receiving apparatus 200 may detect and read 2D/3D content linkage information from at least one from among the descriptor field 'descriptor()' 1242 of the BAT information 1200, the descriptor field 'descriptor()' 1332 of the NIT information 1300, the linkage descriptor 'linkage descriptor' and the descriptor field 'descriptor()' 1422 of the SDT information 1400, and the linkage descriptor 'linkage descriptor' and the descriptor field 'descriptor()' 1542 of the EIT information 1500. Then, the digital broadcasting content receiving apparatus 200 may search for 3D content linked to the current content and may reproduce the 3D content in 3D.

When the digital broadcasting content receiving apparatus 200 receives the digital broadcasting content provided according to the ATSC format, the EPG 3D reproduction information is detected and read from at least one from among the descriptor field 'descriptor()' 1332 of the NIT information 1300, the field 'descriptor()' 1422 of the SDT information 1400, and the descriptor field 'descriptor()' 1544 of the EIT information 1500 based on the DVB format. Then, the digital broadcasting content receiving apparatus 200 may reproduce the EPG screen in 3D by using the EPG 3D reproduction information.

Also, when the digital broadcasting content receiving apparatus 200 receives the digital broadcasting content provided according to the DVB format, the 3D channel bonding information may be detected and read from at least one from among the descriptor field 'descriptor()' 1332 of the NIT information 1300, the linkage type information 'linkage_type' of the linkage descriptor 'linkage_descriptor', and the descriptor field 'descriptor()' 1422 and the service type information 'service_type' of the SDT information 1400. Then, the digital broadcasting content receiving apparatus 200 may restore content extracted from a channel linked to the current channel and may reproduce the restored content in 3D.

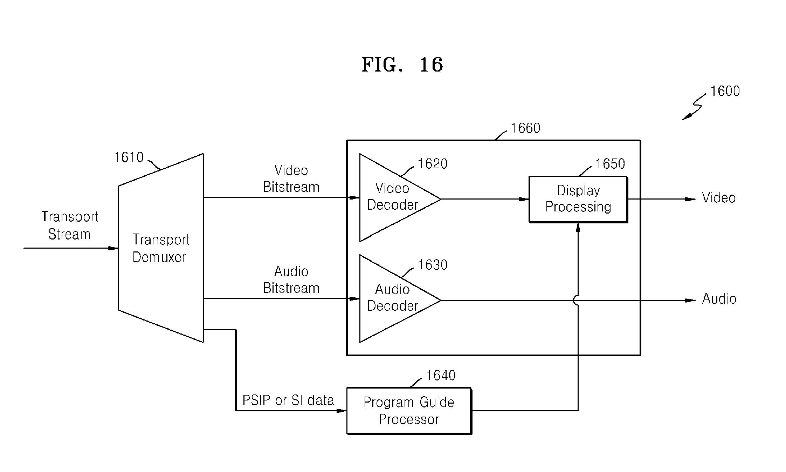

FIG. 16 is a schematic diagram for describing an operation of a digital broadcasting content receiving apparatus 1600 for reproducing the digital broadcasting content and the EPG screen by using service additional information, according to another embodiment of the present invention.

The digital broadcasting content receiving apparatus 1600 is another embodiment of the digital broadcasting content receiving apparatus 200 described above with reference to FIG. 1. The digital broadcasting content receiving apparatus 1600 reproduces the digital broadcasting content and the EPG screen by using the PSIP information according to the ATSC format or the SI information according to the DVB format.

An operation of a demultiplexer 1610 of the digital broadcasting content receiving apparatus 1600 corresponds to operations of the transport stream demultiplexer 210 and the service additional information extracting unit 220 of the digital broadcasting content receiving apparatus 200. Operations of a program guide processing unit 1640 and a content output unit 1660 of the digital broadcasting content receiving apparatus 1600 correspond to operations of the content restoring unit 230 and the reproducing unit 240 of the digital broadcasting content receiving apparatus 200, respectively.

The demultiplexer 1610 may receive the transport stream and may demultiplex the transport stream into a video bitstream, an audio bitstream, and additional information of the PSIP information or the SI information. The program guide processing unit 1640 may detect a plurality of pieces of information regarding the current program to be displayed on the EPG screen from the PSIP information or the SI information that is output from the demultiplexer 1610 to constitute the EPG screen.

The content output unit 1660 may output video content and audio content by decoding the video bitstream and the audio bitstream that are output from the demultiplexer 1610 by using a video decoder 1620 and an audio decoder 1630. At this time, a display processing unit 1650 may mix the decoded video content and the EPG screen constituted by the program guide processing unit 1640 to display the EPG screen on a screen in which the video content is reproduced.

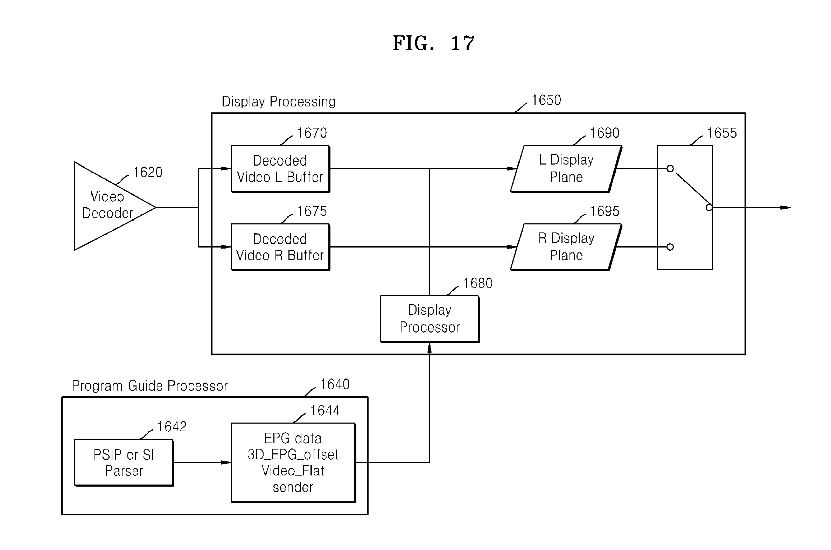

FIG. 17 is a schematic diagram for describing an operation of the digital broadcasting content receiving apparatus 1660 of FIG. 16 for displaying 3D broadcasting content and a 3D EPG screen by using service additional information, according to an embodiment of the present invention.

When the digital broadcasting content receiving apparatus 1600 of FIG. 16 receives 3D video content as the digital broadcasting content, left-view video data and right-view video data are decoded by using the video decoder 1620 of the content output unit 1660, and the decoded left-view video data and right-view video data may be stored in a left-view video buffer 1670 and a right-view video buffer 1675, respectively.

A PSIP/SI parsing unit 1642 of the program guide processing unit 1640 may analyze the PSIP information or the SI information to extract EPG reproduction information 1644. The EPG reproduction information 1644 may include EPG data, location information '3D_EPG_offset' of the 3D EPG screen for reproducing the EPG screen in 3D, information 'Video_Flat' regarding a reproduction method of the current content when the EPG screen is reproduced in 3D, and service provider information 'sender'.

A display processor 1680 may mix the left-view video data and the right-view video data that are respectively output from the left-view video buffer 1670 and the right-view video buffer 1675 with the EPG screen based on the EPG reproduction information 1644.

The digital broadcasting content receiving apparatus 1600 of FIG. 16 generates a left-view EPG plane and a right-view EPG plane of 3D EPG based on the EPG 3D reproduction information, and respectively mixes the left-view EPG plane and the right-view EPG plane with the left-view video and the right-view video, thereby configuring a left-view video display plane 1690 and a right-view video display plane 1695 in which the left-view EPG plane and the right-view EPG plane are respectively displayed.

In order to generate the left-view EPG screen and the right-view EPG screen of the 3D EPG screen based on the EPG 3D reproduction information, a 3D EPG offset may be differently applied to a 2D EPG screen according to viewpoints. For example, if the 3D EPG offset is a left and right moving distance of a pixel, the 2D EPG screen may be moved by the offset along an x-axis in a negative or positive direction to generate the left-view EPG screen, and the 2D EPG screen may be moved by the offset along an x-axis in a negative or positive direction to generate the right-view EPG screen. Alternatively, when the 3D EPG offset is a disparity between the left view and the right view, the 2D EPG screen may be fixed to the left-view EPG screen and may be moved along an x-axis in a negative or positive direction to generate the right-view EPG screen.

At this time, a method of generating the 3D EPG screen may vary according to characteristics of the 3D EPG offset. In order to reproduce the EPG screen in 3D, a location in which the EPG screen is displayed on the left-view video data and a location in which the EPG screen is displayed on the right-view video data may be adjusted by depth, disparity, or binocular parallax, based on the location information '3D_EPG_offset' of the 3D EPG screen of the EPG reproduction information 1644.

Combination data of the left-view video data and the EPG screen may be displayed on the left-view video display plane 1690, and combination data of the right-view video data and the EPG screen may be displayed on the right-view video display plane 1695. The left-view video display plane 1690 and the right-view video display plane 1695 are alternately reproduced via a switch 1655 alternating according to a display frequency, and thus the content and the EPG screen may be simultaneously reproduced in 3D.

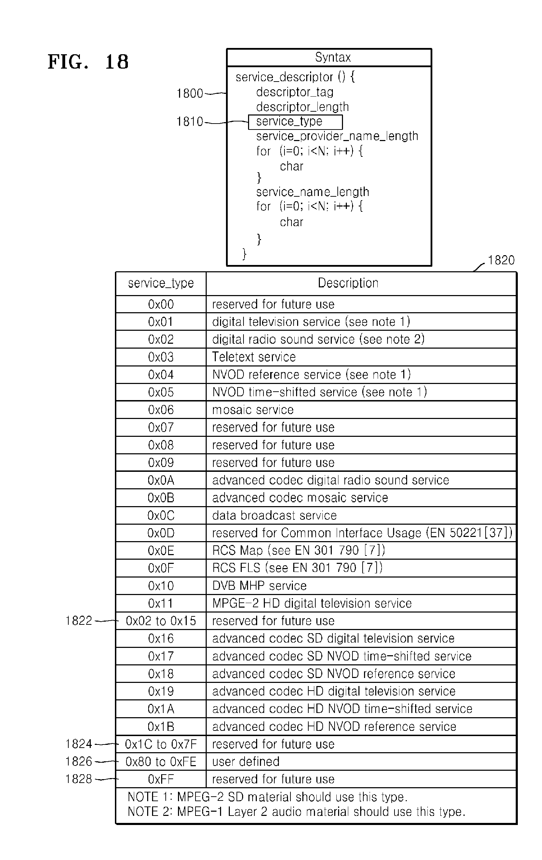

Hereinafter, various embodiments of the 2D/3D content identification information, the 2D/3D content link information, the EPG 3D reproduction information, and the 3D channel bonding information will be described with reference to FIGS. 18 to 35.

First, when the digital broadcasting content transmitting apparatus 100 provides the digital broadcasting content according to the ATSC format, examples of using the 2D/3D content identification information and the 2D/3D content link information will be described with reference to the TVCT information 600 of FIG. 6.

Table 1 shows a semantic of the service type information 'service_type' 680 in the TVCT information 600.

**[Table 1]**

| service_type | Meaning |
|---|---|
| 0x00 | [Reserved] |
| 0x01 | Analog Television |
| 0x02 | ATSC Digital Television |
| 0x03 | ATSC Audio |
| 0x04 | ATSC Data Only Service |
| 0x05 | ATSC Software Download Service |
| 0x06 | Unassociated/Small Screen Service |
| 0x07 | Parameterized Service |
| 0x08-0x3F | - |

When the digital broadcasting content transmitting apparatus 100 transmits the 3D content service according to the ATSC format, an 'ATSC 3D Service' type may be additionally allocated to reserved values of which the service_type are 0x08 to 0x3F in the 'service_type' 620 of the TVCT information 600 in order to represent that the current service is a 3D service type. In other words, the 2D/3D content identification information may be transmitted by additionally allocating the 'ATSC 3D Service' type to the 'service_type' 620 of the TVCT information 600.

Also, the digital broadcasting content transmitting apparatus 100 may generate a 2D/3D content identification descriptor '3D_lin king_type_descriptor' including the 2D/3D content identification information and a 2D/3D content link descriptor '3D_linking_descriptor' including the 2D/3D content link information and may insert the generated 2D/3D content identification descriptor '3D_linking_type_descriptor' and 2D/3D content link descriptor '3D_linking_descriptor' to loops 602, 604, and 606 of the TVCT information 600. Table 2 shows a syntax of the 2D/3D content identification descriptor '3D_linking_type_descriptor'.

**[Table 2]**

| Syntax | |
|---|---|
| 3d_linking_type_descriptor(){ | |
| | descriptor_tag |
| | descriptor_length |
| | 3d_linking_type |
| | reserved |
| } | |

The '3d_linking_type' may describe a method of transmitting 3D content.

**[Table 3]**

| 3d_linking_type | Meaning |
|---|---|
| 0x01 | Provide 3D additional information in the same channel |
| 0x02 | Provide 3D additional information by using another channel |
| 0x03 | Provide 3D content through download service |
| 0x04 | Provide 3D content through NRT service linkage |
| 0x05 | Provide 3D video content through another channel |

Regarding a 3D content transmission method determined to be '3d_linking_type = 0x01' and '3d_linking_type = 0x02', 3D additional information required to reproduce the current 2D content in 3D may be provided via the same channel and different channels. The 3D additional information may include one of additional-viewpoint video data, depth information, disparity map information, and binocular parallax information between base-viewpoint and additional-viewpoint video data. The 3D additional information may include a combination of at least two pieces of 3D additional information.

Regarding a 3D content transmission method determined to be '3d_linking_type = 0x03', download service that downloads the 3D content through the same channel, a different channel, or different time zones of the same channel may be provided.

Regarding a 3D content transmission method determined to be '3d_linking type = 0x04', a NRT service providing 3D content by using services such as a push serive, browsing & download services, or a portal service may be provided.

Regarding 3D content service type information which is '3d_linking type = 0x05', the 3D video content of the current 2D content, instead of the additional information for reproducing the current 2D content in 3D, may be independently provided via another channel.

Accordingly, since 3D content transmission type information '3d_linking_type' may represent whether to transmit 3D content, the 3D content transmission type information '3d_linking_type' may be an embodiment of the 2D/3D content identification information.

Also, the digital broadcasting content transmitting apparatus 100 may insert 3D content service type information '3d_linking_type' into one of the reserved field of the loop 602 of the TVCT information 600. Table 4 shows a syntax of the 2D/3D content link descriptor 'channe_linking_descriptor' including the 2D/3D content link information.

**[Table 4]**

| Syntax | |
|---|---|
| channel_linking_descriptor(){ | |
| | descriptor_tag |
| | descriptor_length |
| | if 3d_linking_type != 0x07) { |
| | link_major_number |
| | link_minor_number |
| | link_carrier_frequency |
| | link_program_number |
| | link_source_id |
| | link_url_indicator |
| | 3d_linking_type |
| | reserved |
| | } |
| | if(link_url_indicator) { |
| | url_length |
| | for ( k = 0; k< url_length; k++) |
| | link_source_URL |
| } | |
| if 3d_linking_type == 0x03 \|\| | |
| | 3d_linking == 0x04 |
| | link_service_start_time |
| } | |

The 'link_major_number' may include information regarding a major channel number that transmits 3D content linked to the current channel. The 'link_minor_number' may include information regarding a minor channel number that transmits 3D additional information linked to the current channel.

The 'linked_carrier_frequency' may include information regarding a carrier frequency transmitting the 3D additional information and information regarding radio frequency (RF). The 'link_program_number' may include information regarding a linkage program number providing the linked 3D content when the 3D content linked to the current content exists in the same program or different programs.

The 'link_source_id' may include the EIT information and the ETT information for providing text information regarding the 3D content service linked to the VCT information, and linkage information regarding the EIT information and the ETT information.

The 'link_url_indicator' may include an identifier representing that there is a uniform resource locator (URL) regarding the linked 3D content. The 'link_source_URL' may include information regarding a URL address providing the 3D content linked to the current content and linkage information.

When the 3D content transmission type is a download service and an NRT service, the 'link_service_start_time' may include information regarding a time when the linked 3D content service is provided.

Accordingly, since the digital broadcasting content transmitting apparatus 100 may describe various pieces of information regarding the linked 3D content of the current content by using the 2D/3D content link descriptor 'channel_linking_descriptor', the 2D/3D content link information may be transmitted to a receiving end through the TVCT information 600.

Also, the digital broadcasting content receiving apparatus 200 may extract and read the 2D/3D content identification information and the 2D/3D content link information from the 2D/3D content identification descriptor '3D_linking_type_descriptor' or the 2D/3D content link descriptor '3D_linking_descriptor' included in the loops 602, 604, and 606 of the TVCT information 600 to determine whether the current content is 2D content or 3D content, and may search for linked 3D content. Also, the digital broadcasting content receiving apparatus 200 may display on the EPG screen whether the current service is 2D content or 3D content.

In the above described embodiments, a method of transmitting the 2D/3D content identification information and the 2D/3D content link information by using the TVCT information 600 has been described. However, the 2D/3D content identification information, the 2D/3D content identification descriptor, the 2D/3D content link information, and the 2D/3D content link descriptor of Tables 1 to 4 may be applied to a cable_virtual_channel_table (CVCT) using a cable method.

Hereinafter, examples of using the 2D/3D content identification information and the 2D/3D content link information will be described with reference to the BAT information 1200, the NIT information 1300, the SDT information 1400, and the EIT information 1500 of FIGS. 12 to 15 when the digital broadcasting content transmitting apparatus 100 provides the digital broadcasting content according to the DVB format.

The digital broadcasting content transmitting apparatus 100 may insert the 2D/3D content identification information into at least one of the service type information 'service_type' of the service descriptor 'Service descriptor' of the SDT information 1400 and the service type information 'service_type' of the service list descriptor 'Service list descriptor' of the BAT information 1200 and the NIT information 1300 and may transmit the 2D/3D content identification information.

FIG. 18 shows a syntax 1800 of the service descriptor from among descriptors of the SDT information 1400, and a table 1820 of service type information of the service descriptor, according to an embodiment of the present invention.

The service descriptor 'Service descriptor' may be inserted into the descriptor field 1422 of a loop 1420 of the SDT information 1400. The service type information 'service_type' 1810 of the service descriptor 'Service descriptor' describes a kind of the current service type, and the table 1820 of the service type information 'service_type' 1810 shows a kind of a describable service type.

The digital broadcasting content transmitting apparatus 100 may additionally allocate the service type information providing 3D content to the service type information 'service_type' 1810 of the service descriptor 'Service descriptor' of the SDT information 1400. For example, the digital broadcasting content transmitting apparatus 100 may additionally allocate the 3D content service type information representing that the 3D content service is provided to reserved values 1822, 1824, 1826, and 1828 in the table 1820 of the service type information 'service_type' 1810.

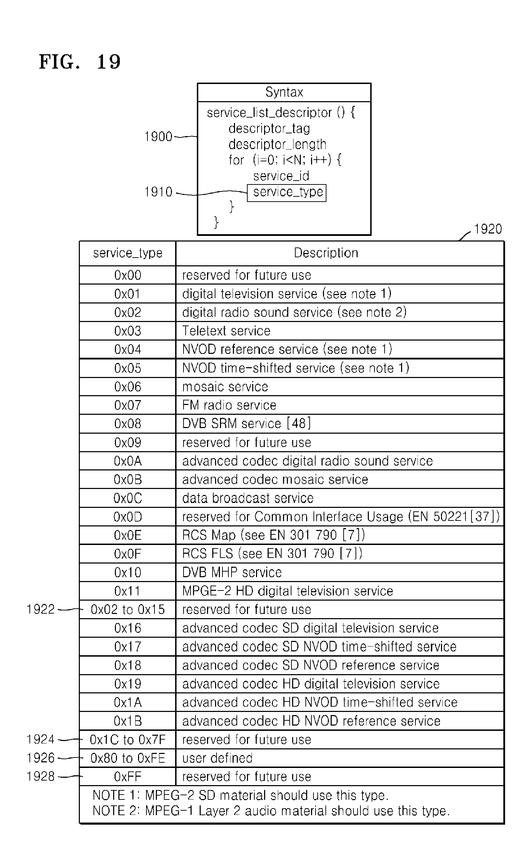

FIG. 19 shows a syntax 1900 of a service list descriptor from among the descriptors of the BAT information 1200 and the NIT information 1300, and a table 1920 of service type information of the service list descriptor, according to an embodiment of the present invention.

The service list descriptor 'Service list descriptor' may be inserted into at least one of the descriptor field 'descriptor()' 1242 of a loop 1240 of the BAT information 1200 and the descriptor field 'descriptor()' 1332 of a loop 1330 of the NIT information 1300. A service type information 'service_type' 1910 of the service list descriptor 'Service list descriptor' describes a kind of the current service type, and the table 1920 of the service type information 'service_type' 1910 shows a kind of a describable service type.

The digital broadcasting content transmitting apparatus 100 may additionally allocate the service type information providing the 3D content to the service type information 'service_type' 1910 of the service list descriptor'Service list descriptor' of the BAT information 1200 and the NIT information 1300. For example, the digital broadcasting content transmitting apparatus 100 may additionally allocate the 3D content service type information representing that the 3D content service is provided to reserved values 1922, 1924, 1926, and 1928 in the table 1920 of the service type information 'service_type' 1910.

Also, the digital broadcasting content receiving apparatus 200 may read at least one from among the service type information 'service_type' 1810 of the service descriptor 'Service descriptor' of the SDT information 1400 and the service type information 'service_type' 1910 of the service list descriptor 'Service list descriptor' of the BAT information 1200 and the NIT information 1300, may determine whether the service type of the current content is a 3D content service, and may display on the EPG screen that the current service is 2D content or 3D content.

The digital broadcasting content transmitting apparatus 100 may insert the 2D/3D content identification information into the transport stream by using at least one of the reserved field 'reserved_future_use' 1416 and the descriptor field 'descriptor()' 1422 of the SDT information 1400 and the descriptor field 'descriptor()' 1542 of the EIT information 1500.

The 2D/3D content identification information is inserted into a part of the reserved field 'reserved_future_use' 1416 of the SDT information 1400, and thus the loop 1410 of the SDT information 1400 may be changed as shown in Table 5.

**[Table 5]**

| Syntax | |
|---|---|
| ... | |
| For( i=0; i<N; i++){ | |
| | service_id |
| | **reserved_future_use** |
| | **3d_service** |
| | EIT_schedule_flag |
| | EIT_present_following_flag |
| | running_status |
| | free_CA_mode |
| | descriptor_loop_length |
| | for (j=0; j<N; j++){ |
| | descriptor() |
| | } |
| ... | |

'3d_service' as the 2D/3D content identification information may be inserted into the SDT information 1400, and then the '3d_service' may be transmitted.

Tables 6 and 7 show semantics of the '3d_service'.

**[Table 6]**

| 3d_service | Description |
|---|---|
| 0 | 2D or Main video service |
| 1 | Mixed 2D/3D service |
| 2 | 3D only service |
| 3 | Additional 3D service |
| [4:15] | reserved |

**[Table 7]**

| 3d_service | Description |
|---|---|
| 0 | 2D or 3D Main video service |
| 1 | Mixed 2D/3D service |
| 2 | 3D only service |
| 3 | Depth/disparity map |
| 4 | parallax |
| 5 | R video |
| 6 | R video + depth |
| 7 | R video + parallax |

According to Table 6, the '3d_service' may describe that the current service is one from among a '3d_service' main-view video service, a mixed video service of a 2D video and a 3D video, a single 3D video service, and a 3D additional information service.

The 2D main-view video service may provide only the 2D video service through the current service or may provide only a main-view video between a multi-view video and a stereoscopic video.

The mixed video service of the 2D video and the 3D video may provide the 2D video and the 3D video by mixing them in a time-division processing.

The single 3D video service may provide information according to views which constitutes a 3D video, such as a side-by-side format, a top-and-bottom format, or a multi-view coding (MVC) format, by including the information in one stream.

Table 7 shows an embodiment in which 3D additional information service of the '3d_service' is departmentalized. In other words, the '3d_service' shown in Table 7 may described that the current service is one from among a 2D main-view video service, a mixed video service of a 2D video and a 3D video, a single 3D video service, a depth/disparity map information service, a binocular parallax information service, a additional-view video (R video) service, a mixed service of the additional-view video and depth information, and a mixed service of the additional-view video and binocular parallax information.

The digital broadcasting content transmitting apparatus 100 may determine a 3D service descriptor '3d_service_descriptor' including the '3d_service' and may insert the determined 3D service descriptor '3d_service_descriptor' into the descriptor field 'descriptor()' 1422 of the loop 1420 in the SDT information 1400. Table 8 shows a syntax of the 3D service descriptor '3d_service_descriptor' inserted into the descriptor field 'descriptor()' 1422 of the SDT information 1400.

**[Table 8]**

| Syntax | |
|---|---|
| 3d_service_descriptor(){ | |
| | descriptor_tag |
| | descriptor_length |
| | 3d_service |
| | reserved |
| } | |

The digital broadcasting content transmitting apparatus 100 may determine a 3D event descriptor '3d_event_descriptor' including the 2D/3D content identification information and may insert the determined 3D event descriptor '3d_event_descriptor' into the descriptor field 'descriptor()' 1542 of the EIT information 1500.

Table 9 shows a syntax of the 3D event descriptor '3d_event_descriptor'.

**[Table 9]**

| Syntax | |
|---|---|
| 3d_event_descriptor(){ | |
| | descriptor_tag |
| | descriptor_length |
| | 3d_event |
| | reserved |
| } | |

Tables 10 and 11 show semantics of the 3D event information '3d_event' which is a kind of the 2D/3D content identification information.

**[Table 10]**

| 3d_event | Description |
|---|---|
| 0 | 2D or Main video event |
| 1 | Mixed 2D/3D event |
| 2 | 3D only event |
| 3 | Additional 3D event |
| [4:15] | reserved |

**[Table 11 ]**

| 3d_event | Description |
|---|---|
| 0 | 2D or 3D Main video event |
| 1 | Mixed 2D/3D event |
| 2 | 3D only event |
| 3 | Depth/disparity map |
| 4 | parallax |
| 5 | R video |
| 6 | R video + depth |
| 7 | R video + parallax |

According to Table 10, the '3d_event' may describe that the current event is one from among a 2D main-view video event, a mixed event of a 2D video and a 3D video, a single 3D video event, and a 3D additional information event.

Table 11 shows an embodiment in which the 3D additional information event in the '3d_event' shown in Table 10 is departmentalized. According to Table 11, the '3d_event' may described that the current event is one from among the 2D main-view video event, a mixed video event of a 2D video and a 3D video, a single 3D video event, a depth/disparity map information event, a binocular parallax information event, an additional-view video (R video) event, a mixed event of the additional-view video and the depth information, and a mixed event of the additional-view video and the binocular parallax information.

The digital broadcasting content receiving apparatus 200 may read the 2D/3D content identification information from the '3d_service' of the reserved field 'reserved_future_use' 1416 or the descriptor field 'descriptor()' 1422 of the reserved field 'reserved_future_use' 1416 or descriptor field 'descriptor()' 1422 and from the '3d_event' of the descriptor field 'descriptor()' 1542 of the EIT information 1500, may determine whether the current content is 3D content, and may display on the EPG screen whether the current service or the current even is 3D content.

The digital broadcasting content transmitting apparatus 100 may insert the 2D/3D content identification information into the transport stream by using a component descriptor 'Component_descriptor' of the descriptor field 'descriptor()' 1422 of the SDT information 1400 or the descriptor field 'descriptor()' 1542 of the EIT information 1500.

Table 12 shows a syntax of the component descriptor 'Component_descriptor' of the SDT information 1400 or the EIT information 1500.

**[Table 12]**

| Syntax | |
|---|---|
| component_descriptor () { | |
| | descriptor_tag |
| | descriptor_length |
| | reserved_future_use |
| | stream_content |
| | component_type |
| | component_tag |
| | ISO_639_language code |
| | for (i=0;i<N;i++) { |
| | text char |
| | } |
| } | |

Table 13 shows a conventional semantic of a component type information 'component_type' in the component descriptor 'Component_descriptor' of the SDT information 1400 or the EIT information 1500.

**[Table 13]**

| Stream_content | Component_type | Description |
|---|---|---|
| 0x00 | 0x00 to 0xFF | reserved for future use |
| 0x01 | 0x00 | reserved for future use |
| 0x01 | 0x01 | MPEG-2 video, 4:3 aspect ratio, 25 Hz |
| 0x01 | 0x02 | MPEG-2 video, 16:9 aspect ratio with pan vector, 25 Hz |
| 0x01 | 0x03 | MPEG-2 video, 16:9 aspect ratio without pan vector, 25 Hz |
| 0x01 | 0x04 | MPEG-2 video, > 16:9 aspect ratio, 25 Hz |
| 0x01 | 0x05 | MPEG-2 video, 4:3 aspect ratio, 30 Hz |
| 0x01 | 0x06 | MPEG-2 video, 16:9 aspect ratio with pan vector, 30 Hz |
| 0x01 | 0x07 | MPEG-2 video, 16:9 aspect ratio without pan vector, 30 Hz |
| 0x01 | 0x08 | MPEG-2 video, > 16:9 aspect ratio, 30 Hz |
| 0x01 | 0x09 | MPEG-2 high definition video, 4:3 aspect ratio, 25 Hz |
| 0x01 | 0xOA | MPEG-2 high definition video, 16:9 aspect ratio with pan vector, 25 Hz |
| 0x01 | 0x0B | MPEG-2 high definition video, 16:9 aspect ratio without pan vector, 25 Hz |
| 0x01 | 0x0C | MPEG-2 high definition video, > 16:9 aspect ratio, 25 Hz |

The digital broadcasting content transmitting apparatus 100 may additionally allocate the 3D video component type information to reserved values of the 'component_type' in the component descriptor 'Component_descriptor'. Table 14 shows a semantic in which the 3D video component type information is additionally allocated to the 'component_type'.

**[Table 14]**

| Stream_content | Component_type | Description |
|---|---|---|
| 0x01 | 0x11 | MPEG-2 half 3D video, 4:3 aspect ratio, 25 Hz |
| 0x01 | 0x12 | MPEG-2 half 3D video, 16:9 aspect ratio with pan vector, 25 Hz |
| 0x01 | 0x13 | MPEG-2 half 3D video, 16:9 aspect ratio without pan vector, 25 Hz |
| 0x01 | 0x14 | MPEG-2 half 3D video, > 16:9 aspect ratio, 25 Hz |
| 0x01 | 0x15 | MPEG-2 half 3D video, 4:3 aspect ratio, 30 Hz |
| 0x01 | 0x16 | MPEG-2 half 3D video, 16:9 aspect ratio with pan vector, 30 Hz |
| 0x01 | 0x17 | MPEG-2 half 3D video, 16:9 aspect ratio without pan vector, 30 Hz |
| 0x01 | 0x18 | MPEG-2 half 3D video, > 16:9 aspect ratio, 30 Hz |
| 0x01 | 0x19 | MPEG-2 3D video, 4:3 aspect ratio, 25 Hz |
| 0x01 | 0x1A | MPEG-2 3D video, 16:9 aspect ratio with pan vector, 25 Hz |
| 0x01 | 0x1B | MPEG-2 3D video, 16:9 aspect ratio without pan vector, 25 Hz |
| 0x01 | 0x1C | MPEG-2 3D video, > 16:9 aspect ratio, 25 Hz |
| 0x01 | 0x1D | MPEG-2 3D video, 4:3 aspect ratio, 30 Hz |
| 0x01 | 0x1E | MPEG-2 3D video, 16:9 aspect ratio with pan vector, 30 Hz |
| 0x01 | 0x1 F | MPEG-2 3D video, 16:9 aspect ratio without pan vector, 30 Hz |
| 0x01 | 0x20 | MPEG-2 3D video, > 16:9 aspect ratio, 30 Hz |

In other words, while the 'component_type' shown in Table 13 has values 0x01 to 0x0C, the 'component_type' shown in Table 14 uses a region after a field value 0x11 to additionally allocate 3D video component type information 'MPEG-2 half 3D video' or 'MPEG-2 3D video'. In addition to the 2D/3D content identification information, information such as resolution, an aspect ratio, or frequency of a current component may be set based on the 'component_type' shown in Table 14.

Also, the digital broadcasting content transmitting apparatus 100 may additionally define the 3D video component type information for the transport stream decoded according to an H.264 format, and may insert the 3D video component type information into the 'component_type' of the component descriptor 'Component_descriptor' of the SDT information 1400 or the EIT information 1500. Table 15 shows the 'component_type' to which the 3D video component type information for the transport stream decoded according to the H.264 format is added.

**[Table 15]**

| Stream_content | Component_type | Description |
|---|---|---|
| 0x05 | 0x11 | H.264/AVC half 3D video, 4:3 aspect ratio, 25 Hz |
| 0x05 | 0x12 | H.264/AVC half 3D video, 16:9 aspect ratio with pan vector, 25 Hz |
| 0x05 | 0x13 | H.264/AVC half 3D video, 16:9 aspect ratio without pan vector, 25 Hz |
| 0x05 | 0x14 | H.264/AVC half 3D video, > 16:9 aspect ratio, 25 Hz |
| 0x05 | 0x15 | H.264/AVC half 3D video, 4:3 aspect ratio, 30 Hz |
| 0x05 | 0x16 | H.264/AVC half 3D video, 16:9 aspect ratio with pan vector, 30 Hz |
| 0x05 | 0x17 | H.264/AVC half 3D video, 16:9 aspect ratio without pan vector, 30 Hz |
| 0x05 | 0x18 | H.264/AVC half 3D video, > 16:9 aspect ratio, 30 Hz |
| 0x05 | 0x19 | H.264/AVC 3D video, 4:3 aspect ratio, 25 Hz |
| 0x05 | 0x1A | H.264/AVC 3D video, 16:9 aspect ratio with pan vector, 25 Hz |
| 0x05 | 0x1 B | H.264/AVC 3D video, 16:9 aspect ratio without pan vector, 25 Hz |
| 0x05 | 0x1C | H.264/AVC 3D video, > 16:9 aspect ratio, 25 Hz |
| 0x05 | 0x1 D | H.264/AVC 3D video, 4:3 aspect ratio, 30 Hz |
| 0x05 | 0x1 E | H.264/AVC 3D video, 16:9 aspect ratio with pan vector, 30 Hz |
| 0x05 | 0x1 F | H.264/AVC 3D video, 16:9 aspect ratio without pan vector, 30 |
| | | Hz |
| 0x05 | 0x20 | H.264/AVC 3D video, > 16:9 aspect ratio, 30 Hz |

In the 3D video component type defined by the 'component type' described with reference to Tables 14 and 15, an 'MPEG-2 half 3D video' type or an 'H.264/AVC half 3D video' type may be extended to a detailed 3D image configuration format such as a side-by-side format or a top-and-bottom format.

Also, in the 3D video component type defined by the 'component_type', the 'MPEG-2 3D video' type or the 'H.264/AVC 3D video' type having a full resolution may be extended to an 'L/R(2ES)' type in which an elementary stream of the left-view video and an elementary stream of the right-view video are respectively transmitted, an 'MVC' type in which an elementary stream of a major view 2D video and an auxiliary stream of the additionalview video are transmitted, a '2D + depth' type in which a combination of the main-view 2D video and depth information is transmitted, a '2D+ parallax' type in which a combination of the main-view 2D video and the binocular parallax information is transmitted, an 'L + depth' type in which a combination of the left-view video and the depth information is transmitted, an 'L+ parallax' type in which a combination of the left-view video and the binocular parallax information is transmitted, an 'L + R+ depth' type in which a combination of the right-view video and the depth information is transmitted, and the like.

Also, the digital broadcasting content transmitting apparatus 100 may additionally define the 3D video content information by using reserved values of 'stream_content' of the component descriptor 'Component_descriptor' of the SDT information 1400 or the EIT information 1500. Table 16 shows the 'stream_content' to which the 3D video content information is added.

**[Table 16]**

| Stream_content | Component_type | Description |
|---|---|---|
| 0x09 (reserved) | 0x00 | 2D video |
| 0x09 | 0x01 | 3D video |
| 0x09 | 0x02 | Mixed 2D/3D video |
| 0x09 | 0x03 | Additional 3D video (depth or disparity or R video or dependent view or sub view) |
| 0x09 | 0x04 | 3D subtitle |
| 0x09 | 0x05 to 0xFF | reserved for future use |

Also, the digital broadcasting content transmitting apparatus 100 may insert the 2D/3D content identification information into the transport stream by using the reserved fields of the component descriptor 'Component_descriptor' that may be inserted into the descriptor field 'descriptor()' 1542 of the EIT information 1500. Table 17 shows an embodiment in which the digital broadcasting content transmitting apparatus 100 inserts the 2D/3D content identification information into the reserved field 'reserved_future_use' of the component descriptor 'Component_descriptor' shown in Table 12.

**[Table 17]**

| Syntax | |
|---|---|
| Component_descriptor(){ | |
| | descriptor_tag |
| | descriptor_length |
| | 3d_flag |
| | 3d_event |
| | stream_content |
| | component_type |
| | component_tag |
| | ISO_639_language_code |
| | for(i=0; i<N; i++){ |
| | text_char |
| } | |

'3d_flag' may include information representing whether the current component is a 3D component. For example, if the '3d_flag' has a value of 0, '3d_event' is not read.

The '3d_event' corresponds to the '3d_event' shown in Table 10 or 11.

As shown in Table 18, the digital broadcasting content transmitting apparatus 100 may insert the 2D/3D content identification information into the transport stream by using content attribute information of the content descriptor 'content_descriptor' that may be inserted into the descriptor field 'descriptor()' 1542 of the EIT information 1500.

**[Table 18]**

| Syntax | |
|---|---|
| content_descriptor () { | |
| | descriptor_tag |
| | descriptor_length |
| | for (i=0;i<N;i++) { |
| | content_nibble_level_1 |
| | content_nibble_level_2 |
| | user_byte |
| | } |
| } | |

Information regarding a genre of video content may be described by using a combination of 'content_nibble_level_1' and 'content_nibble_level_2' in the content descriptor 'content_descriptor'.

The digital broadcasting content transmitting apparatus 100 may additionally define a 3D video content type by using the 'content_nibble_level_2' in the content descriptor 'content_descriptor'. Table 19 shows an embodiment in which a genre of 3D video content is added by fixing the 'content_nibble_level_1' and extending the 'content_nibble_level_2' in the content descriptor 'content_descriptor'.

**[Table 19]**

| Content_nibble_level 1 | Content_nibble_level 2 | Description |
|---|---|---|
| 0x01 | 0x09 | 3D Movie/Drama |
| 0x02 | 0x05 | 3D News/Current affairs |
| 0x03 | 0x05 | 3D Show/Game show |
| ··· | ··· | ··· |

Also, the digital broadcasting content transmitting apparatus 100 may additionally define the 3D video content type by using the 'content_nibble_level_1' in the content descriptor 'content_descriptor'. Table 20 shows an embodiment in which a genre of 3D video content is added by extending the 'content_nibble_level_1' in the content descriptor 'content_descriptor'.

**[Table 20]**

| Content_nibble_level 1 | Content_nibble_level 2 | Description |
|---|---|---|
| 0x0C | 0x01 | 3D Movie/Drama |
| 0x0C | 0x02 | 3D News/Current affairs |
| 0x0C | 0x03 | 3D Show/Game show |
| ··· | ··· | ··· |

The digital broadcasting content receiving apparatus 200 may read '3d_event', 'stream_content', or 'component_type' from the component descriptor 'Component_descriptor' of the descriptor field 'descriptor()' 1422 of the SDT information 1400 or the descriptor field 'descriptor()' 1542 of the EIT information 1500, may determine whether the current content is 3D content, and may display on the EPG screen whether the current event is 3D content.

Also, the digital broadcasting content receiving apparatus 200 may read a genre attribute of the current content from the content descriptor 'Content_descriptor' of the descriptor field 'descriptor()' 1542 of the EIT information 1500, may determine whether the current content is 3D content, and may display on the EPG screen whether the current content is 2D content or 3D content.

When the digital broadcasting content transmitting apparatus 100 provides the digital broadcasting content according to the DVB format, the digital broadcasting content transmitting apparatus 100 may insert the 2D/3D content link information in service units into the transport stream and may transmit the 2D/3D content link information by using linkage descriptor 'linkage_descriptor' from among descriptors of the descriptor field 'descriptor()' 1420 of the SDT information 1400 or the descriptor field 'descriptor()' 1542 of the EIT information 1500.

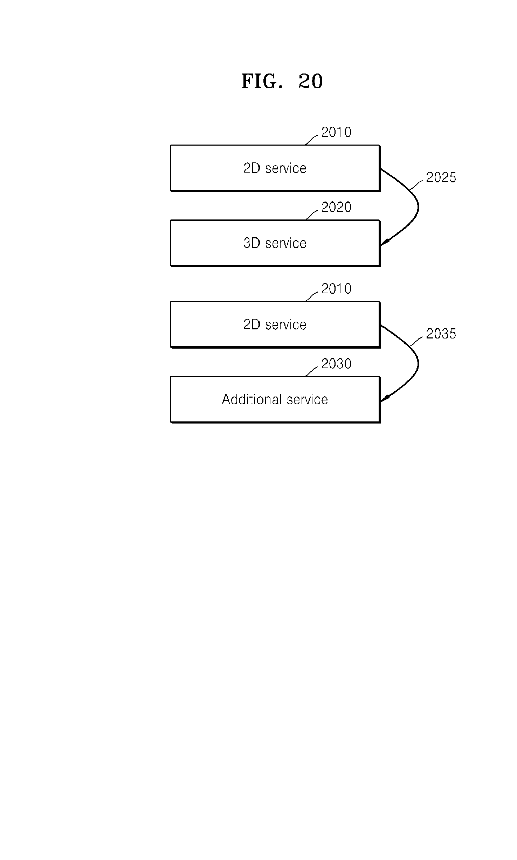

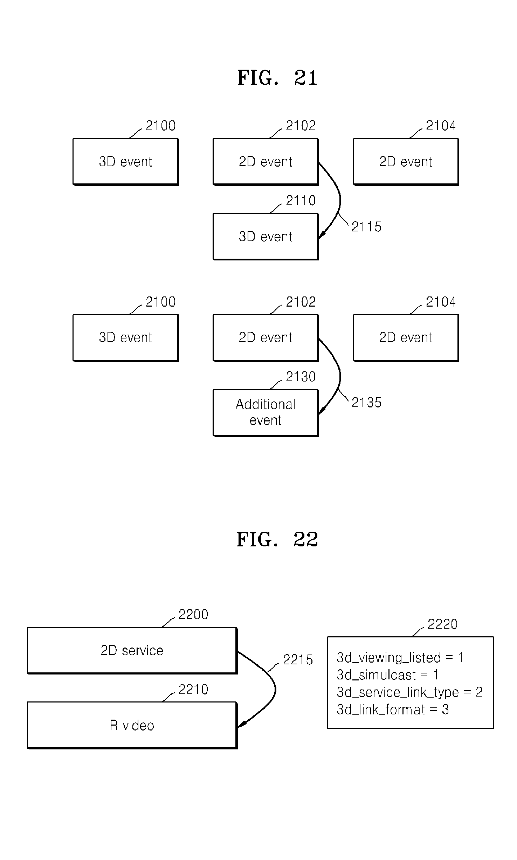

FIGS. 20 and 21 show a relationship between the 2D content and the 3D content in service units and a relationship between the 2D content and the 3D content in event units.

The 2D/3D content link information in service units may include identification information indicating a linked 3D service as the 3D content regarding the current content service and attribute information of the linked 3D service.

In FIG. 20, when a 3D video service 2020 is linked as linked 3D content of a 2D video service 2010, a 2D/3D content link information 2025 of the 2D video service 2010 may include identification information and attribute information of the 3D video service 2020.

Also, when a 3D additional information service 2030 is linked as the linked 3D content of the 2D video service 2010, 2D/3D content link information 2035 of the 2D video service 2010 may include identification information and attribute information of the 3D additional information service 2030.

The 2D/3D content link information in event units may include identification information indicating a linked 3D event as 3D content regarding the current content event, and attribute information of the linked 3D event.

In FIG. 21, when a 3D video event 2100, a 2D video event 2102, and a 2D video event 2104 are successively provided through the current service, if a 3D video event 2110 is linked to the 2D video event 2102, 2D/3D content link information 2115 of the 2D video event 2102 may include identification information and attribute information of the 3D video event 2110.

Also, when a 3D additional information event 2130 is linked as linked 3D content of the 2D video event 2102, 2D/3D content link information 2135 of the 2D video event 2102 may include identification information and attribute information of a 3D additional information event 2130 inconsistent naming.

Accordingly, the 2D/3D content link information may include linkage information between the current content and linked content in service units or event units.

The 2D/3D content link information defined in service units may include information regarding the current service and information regarding linked service.

In the 2D/3D content link information, the information regarding the current service may be inserted into the reserved field 'reserved_future_use' 1416 in the loop 1410 of the SDT information 1400. Also, the digital broadcasting content transmitting apparatus 100 may generate a descriptor including the information regarding the current service in the 2D/3D content link information and may insert the descriptor into the descriptor field 'descriptor()' 1420 of the SDT information 1400.

The information regarding the current service of the 2D/3D content link information may include at least one from among current service type information and 3D content format information regarding the current service.

Tables 21 and 22 show semantics of the current service type information of the 2D/3D content link information and the 3D content format information regarding the current service.

**[Table 21]**

| 3d_service_type | Description |
|---|---|
| 0 | 2D or Main service |
| 1 | 3D only service |
| 2 | additional 3D service |
| [3:7] | reserved |

**[Table 22]**

| 3d_format | Description |
|---|---|
| 0 | 2D video |
| 1 | L video+ R video ( half or full ) |
| 2 | L video |
| 3 | R video |
| 4 | Depth/disparity map |
| 5 | parallax |
| 6 | R video + depth |
| 7 | R video + parallax |
| 8 | L video + depth |
| 9 | L video + parallax |
| [10:15] | Reserved |

Based on '3d_service_type' shown in Table 21, it may be described that the current service is one of the 2D main-view video service, the single 3D video service, and the 3D additional information service.

When the current service is the 2D main-view video service ('3d_service_type = 0'), 3D content format information '3d_format' of the current service may be set to one of 2D video('3d_format = 0'), left-view video('3d_format = 2'), and right-view video('3d_format = 3').

When the current service is the single 3D video service ('3d_service_type = 1'), the 3D content format information '3d_format' of the current service may be set one of a combination of the left-view video and the right-view video ('3d_format = 1'), a combination of the additional-view video and the depth information ('3d_format = 6'), a combination of the additional-view video and the binocular parallax information ('3d_format = 7'), a combination of the main-view video and the depth information ('3d_format = 8'), and a combination of the main-view video and the binocular parallax information ('3d_format = 9').

When the current service is a 3D additional information service ('3d_service_type = 2'), the 3D content format information '3d_format' of the current service may be set to one of the left-view video('3d_format = 2'), the right-view video('3d_format = 3'), depth/disparity map information('3d_format = 4'), binocular parallax information('3d_format = 5'), a combination of the additional-view video and the depth information ('3d_format = 6'), a combination of the additional-view video and the binocular parallax information ('3d_format = 7'), a combination of the main-view video and the depth information ('3d_format = 8'), and a combination of the main-view video and the binocular parallax information ('3d_format = 9').

In the 2D/3D content link information, information regarding the linked service may be inserted into the linkage descriptor 'linkage_descriptor' which is one of the descriptors of the SDT information 1400. Table 23 shows a syntax in which a linkage descriptor field 'linkage_descriptor' of the SDT information 1400, into which the information regarding the linked service of the 2D/3D content link information is inserted, is changed.

**[Table 23]**

| **Syntax** | | |
|---|---|---|
| linkage_descriptor() { | | |
| | | descriptor_tag |
| | | descriptor_length |
| | | transport_stream_id |
| | original_network_id | |
| | service_id | |

| | **linkage_type** | |
|---|---|---|
| | if(linkage_type == 0x0E) { | |
| | | **3d_viewing_listed** |
| | | **3d_simulcast** |
| | | **3d_service_link_type** |
| | | **3d_link_format** |
| | | **additional_info()** |
| | } | |
| } | | |

The digital broadcasting content transmitting apparatus 100 may additionally allocate a 3D service linkage type to reserved field of the linkage type information 'linkage_type' in the linkage descriptor 'linkage_descriptor', wherein the 3D service linkage type represents that the current 2D service is linked to the 3D service to be reproduced in 3D. For example, the 3D service linkage type may be allocated to a field value 0x0E, which is reserved field of the 'linkage_type'. Accordingly, when the linkage type information of the current service is the 3D service linkage type ('linkage_type = 0x0E'), '3d_viewing_listed', '3d_simulcast', '3d_service_link_type', '3d_link_format', and 'additional_info()' may be additionally defined.

The '3d_viewing_listed' may describe whether the 3D service exists in the SDT information of the transport stream designated by 'transport_stream_id', 'original_network_id', and 'service_id'. The '3d_simulcast' may describe whether the 3D service and the current 2D service are simultaneously transmitted.

The '3d_service_link_type' may describe whether the linked 3D service of the current 2D service is single 3D content or 3D additional information. The '3d_link_format' may describe 3D content format information of the linked 3D service.

The 'additional_info()' is a reserved field to be extended later.

Tables 24 and 25 show syntaxes of the '3d_service_link_type' and the '3d_link_format' that are inserted as information regarding the linked service into the linkage descriptor'linkage_descriptor'.

**[Table 24]**

| 3d_service_link_type | Description |
|---|---|
| 0 | reserved |
| 1 | 3D only service |
| 2 | additional 3D service |
| 3 | reserved |

**[Table 25]**

| 3d_link_format | Description |
|---|---|
| 0 | reserved |
| 1 | L video+ R video ( half or full ) |
| 2 | L video |
| 3 | R video |
| 4 | Depth/disparity map |
| 5 | parallax |
| 6 | R video + depth |
| 7 | R video + parallax |
| 8 | L video + depth |
| 9 | L video + parallax |
| [10:15] | Reserved |

Based on the '3d_service_link_type' shown in Table 21, it may be described that the linked service of the current service is any one of the single 3D video service and the 3D additional information service.

When the linked service is the single 3D video service ('3d_service_link_type = 1'), 3D content format information '3d_link_format' of the linked service may be set to any one from among a combination of the left-view video and the right-view video ('3d_link_format = 1'), a combination of the additional-view video and the depth information ('3d_link_format = 6'), a combination of the additional-view video and the binocular parallax information ('3d_link_format = 7'), a combination of the main-view video and the depth information ('3d_link_format = 8'), and a combination of the main-view video and the binocular parallax information ('3d_link_format = 9').

When the linked service is 3D additional information service ('3d_service_link_type = 2'), the 3D content format information '3d_link_format'of the linked service may be set to any one from among the left-view video ('3d_link_format = 2'), the right-view video('3d_link_format = 3'), the depth/disparity map information ('3d_link_format = 4'), the binocular parallax information ('3d_link_format = 5'), a combination of the additional-view video and the depth information ('3d_link_format = 6'), a combination of the additional-view video and the binocular parallax information ('3d_link_format = 7'), a combination of the main-view video and the depth information ('3d_link_format = 8'), and a combination of the main-view video and the binocular parallax information ('3d_link_format = 9').

FIG. 22 is a diagram showing 2D/3D content link information in service units according to a relationship between a 2D service and a 3D service, according to an embodiment of the present invention.

When a 2D service 2200 is linked to a 3D service 2210 of the additional-view video format as a linked service, information 2220 regarding a linked service of 2D/3D content link information 2215 may be inserted into the linkage descriptor 'linkage_descriptor' of the SDT information 1400.

Since the linked 3D service 2210 exists, a value of the '3d_viewing_listed' may be set to 1. Also, since the 3D service 2210 and the current 2D service 2200 are simultaneously transmitted, a value of the '3d_simulcast' may be set to 1.

Since the linked 3D service 2210 of the current 2D service 2200 is 3D additional information instead of a single 3D video, a value of the '3d_service_link_type' may be set to 2. Also, since the linked 3D service 2210 is an additional-view video in the 3D additional information, a value of the '3d_link_format' may be set to 3.

The 2D/3D content link information defined in event units may include information regarding a current event and information regarding a linked event.

The digital broadcasting content transmitting apparatus 100 may generate a descriptor including the information regarding the current event in the 2D/3D content link information, and may insert the generated descriptor into the descriptor field 'descriptor()' 1542 of the loop 1540 of the EIT information 1500.

Table 26 shows a syntax of the 3D event descriptor '3d_event_descriptor' including the information regarding the current event in the 2D/3D content link information.

**[Table 26]**

| Syntax | |
|---|---|
| 3d_event_descriptor(){ | |
| | descriptor_tag |
| | descriptor_length |
| | 3d_event_type |
| | 3d_format |
| | reserved |
| } | |

The 3D event descriptor field '3d_event_descriptor' may include at least one of current event type information '3d_event_type' and 3D content format information '3d_format' of the current event.

Table 27 shows a semantic of the '3d_event_type' for describing the current event type information in the 3D event descriptor field '3d_event_descriptor' including the information regarding the current event in the 2D/3D content link information.

**[Table 27]**

| 3d_event_type | Description |
|---|---|
| 0 | 2D or Main event |
| 1 | 3D only event |
| 2 | additional 3D event |
| [3:7] | reserved |

Based on the '3d_event_type' shown in Table 27, it may be described that the current event is any one from among the 2D main-view video event, the single 3D video event, and the 3D additional information event.

In the 2D/3D content link information in event units, the 3D content format information '3d_format' of the current event may be determined in the same manner as the 3D content format information '3d_format' of the current service shown in Table 22.

In the 2D/3D content link information, the information regarding the linked event may be inserted into the linkage descriptor 'linkage_descriptor', which is any one of the descriptors of the EIT information 1500. Table 28 shows a syntax in which the descriptor field 'linkage_descriptor' of the EIT information 1500, into which the information regarding the linked event of the 2D/3D content link information is inserted, is changed.

**[Table 28]**

| **Syntax** | | |
|---|---|---|
| linkage_descriptor() { | | |
| | descriptor_tag | |
| | descriptor_length | |
| | transport_stream_id | |
| | original_network_id | |
| | service_id | |

| | **linkage_type** | |
|---|---|---|
| | | if(linkage_type == 0x0E) { |
| | | **3d_viewing_event_id** |
| | | **3d_viewing_listed** |
| | | **3d_simulcast** |
| | | **3d-event_link_type** |
| | | **3d_link_format** |
| | | **additional_info()** |
| | } | |
| } | | |

The digital broadcasting content transmitting apparatus 100 may add a 3D event linkage type, which is linked to a 3D event to reproduce the current 2D event in 3D, to the reserved values of the linkage type information 'linkage_type' in the linkage descriptor 'linkage_descriptor'. For example, the 3D event linkage type may be allocated to a field value 0x0E, which is reserved values of the 'linkage_type'. Accordingly, when the linkage type information of the current event is the 3D service linkage type ('linkage_type = 0x0E'), '3d_viewing_event_id', '3d_viewing_listed', '3d_simulcast', '3d_event_link_type', '3d_link_format', and 'additional_info()' may be additionally defined.

The '3d_viewing_event_id' may include identification information of the linked 3D event required to reproduce the current 2D event in 3D. The '3d_viewing_listed' may describe whether a 3D event exists in the SDT information of the transport stream designated by'transport_stream_id', 'original_network_id', and 'service_id'. The '3d_simulcast' may describe whether the 3D event and the current 2D event are simultaneously transmitted.

The '3d_event_link_type' may describe whether the linked 3D event of the current 2D event is single 3D content or 3D additional information. The '3d_link_format' may describe the 3D content format information of the linked 3D event.

The 'additional_info()' is reserved field to be extended later.

Table 29 shows a syntax of the '3d_event_link_type' that is inserted as information regarding the linked service into the linkage descriptor'linkage_descriptor' of the EIT information 1500.

**[Table 29]**

| 3d_event_link_type | Description |
|---|---|
| 0 | reserved |
| 1 | 3D only event |
| 2 | additional 3D event |
| 3 | reserved |

Based on the '3d_event_link_type' shown in Table 29, it may be described that the linked event of the current event is any one of the single 3D video service and the 3D additional information service.

In the 2D/3D content link information in event units, the 3D content format information '3d_format' of the linked event may be determined in the same manner as the 3D content format information '3d_format' of the linked service shown in Table 25.

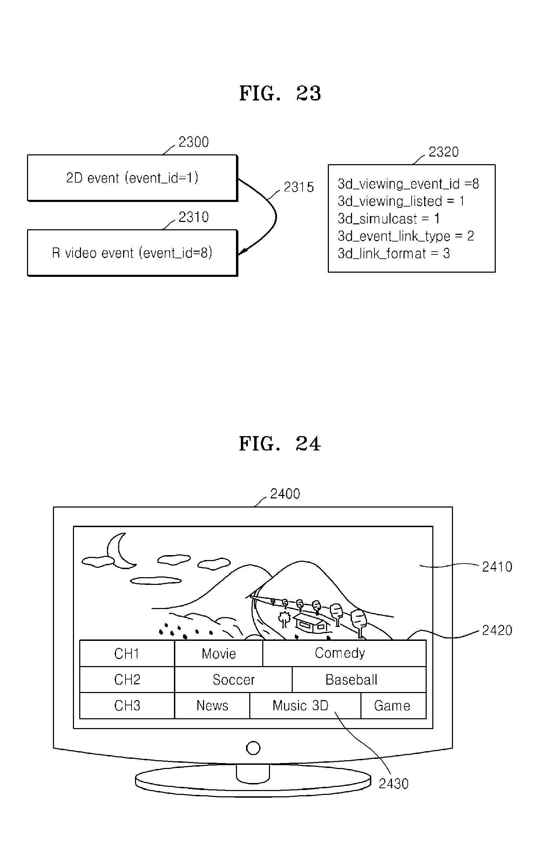

FIG. 23 shows the 2D/3D content link information in event units according to a relationship between a 2D event and a 3D event, according to an embodiment of the present invention.

When a 2D service 2300 is linked to a 3D event 2310 of the additional-view video format as a linked service, information 2320 regarding a linked service of 2D/3D content link information 2315 may be inserted into the linkage descriptor 'linkage_descriptor' of the EIT information 1500.

The linked 3D event 2310 exists, event identification information 'event_id' of the linked 3D event 2310 is 8, and the 3D event 2310 and a current 2D event 2200 are simultaneously transmitted, and thus, '3d_viewing_event_id = 8', '3d_viewing_listed = 1', and '3d_simulcast = 1' may be set.

Since the linked 3D event 2310 of the current 2D event 2300 is the additional-view video which is the 3D additional information instead of the single 3D video, the '3d_service_link_type = 2' and the '3d_link_format = 3' may be set.

Accordingly, the digital broadcasting content receiving apparatus 200 may detect and read the 2D/3D content link information from the linkage descriptor 'linkage_descriptor' of the SDT information 1400 or the EIT information 1500, determine a service type of the current service or an event type of the current event, and search for a linked service or a linked event required to reproduce the current service or the current event in 3D. Also, based on the SDT information 1400 or the EIT information 1500, linked content for reproducing the current content in 3D may be detected in service units or event units. Thus, if the 3D service or the 3D event that may be reproduced in 3D is determined, the digital broadcasting content receiving apparatus 200 may display the 3D service or the 3D event so as to be identified on the EPG screen.

Also, the digital broadcasting content transmitting apparatus 100 may transmit the 2D/3D content link information by using the descriptor field 'descriptor()' 1242 of the BAT information 1200 and the descriptor field 'descriptor()' 1332 of the NIT information 1300.

Based on the 'original_network_id' 1234 and the 'transport_stream_id' 1232 of the BAT information 1200 and the 'original_network_id' 1324 and the 'transport_stream_id' 1322 of a first loop 1320 of the NIT information 1300, the respective transport streams may be uniquely defined. Also, the descriptor field 'descriptor()' 1242 of the loop 1240 and the descriptor field 'descriptor()' 1332 of the second loop 1330 may include attribute information of the respective transport streams.

From among the descriptors of the descriptor field 'descriptor()' 1242 of the loop 1240 of the BAT information 1200 and the descriptor field 'descriptor()' 1332 of the second loop 1330 of the NIT information 1300, a service list descriptor 'service_list_descriptor' may describe information regarding a service provided through one transport stream.

The digital broadcasting content transmitting apparatus 100 may transmit information regarding the current content in the 2D/3D content link information by using the service list descriptor 'service_list_descriptor' of the BAT information 1200 and the NIT information 1300.

The digital broadcasting content transmitting apparatus 100 may additionally allocate the service type information providing the 3D content to the service type information 'service_type' 1910 of the service list descriptor 'Service list descriptor' of the BAT information 1200 and the NIT information 1300 in a similar manner as the 2D/3D content identification information described above with reference to FIG. 19,

Also, the digital broadcasting content transmitting apparatus 100 may generate a descriptor including information regarding linked content in the 2D/3D content link information, may insert the generated descriptor into the descriptor field 'descriptor()' 1242 of the BAT information 1200 and the descriptor field 'descriptor()' 1332 of the NIT information 1300, and may transmit the descriptor. Alternatively, from among the descriptors of the descriptor field 'descriptor()' 1242 of the BAT information 1200 and the descriptor field 'descriptor()' 1332 of the NIT information 1300, the information regarding the linked content in the 2D/3D content link information may be inserted into reserved values of a linkage descriptor field 'linkage_descriptor()'.

The digital broadcasting content receiving apparatus 200 may extract information regarding current content and information regarding linked content of the 2D/3D content link information from the descriptor field 'descriptor()' 1242 of the BAT information 1200 and the descriptor field 'descriptor()' 1332 of the NIT information 1300 to analyze a relationship between services or events linked to one another for 3D reproduction from among received current services or events. Also, since a service or event that may be reproduced in 3D is detected, the digital broadcasting content receiving apparatus 200 may display the service or event so as to be identified on the EPG screen.

Also, the digital broadcasting content transmitting apparatus 100 may transmit the 2D/3D content link information regarding all services provided via a current network or a current bouquet by using the descriptors of the descriptor field 'descriptor()' 1242 of the BAT information 1200 and the descriptor field 'descriptor()' 1332 of the NIT information 1300. Accordingly, integrated channel information and link information between channels for the services provided via the current network or the current bouquet may be provided.

Table 30 shows a set of a service list descriptor 'service_list_descriptor()' and a linkage descriptor 'linkage_descriptor()' to be inserted into the descriptor field 'descriptor()' 1242 of the BAT information 1200 and the descriptor field 'descriptor()' 1332 of the NIT information 1300.

**[Table 30]**

| | |
|---|---|
| service_list_descriptor( ) | |
| { | |
| | service_id #1 |
| | service_id #2 |
| | service_id #3 |
| } | |
| ··· | |
| | |
| linkage_descriptor( ) #1 | |
| { | |
| | service_id #1 |
| | ··· |
| } | |
| | |
| linkage_descriptor( ) #2 | |
| { | |
| | service_id #2 |
| | ··· |
| } | |
| | |
| linkage_descriptor( ) #3 | |
| { | |
| | service_id #3 |
| | ··· |
| } | |

The service list descriptor 'service_list_descriptor()' may include identification information 'service_id #1, #2, #3' regarding the current services provided via the current transport stream. The linkage descriptor 'linkage_descriptor #1, #2, #3' may provide identification information regarding linked services for the current services. For example, channel attribute information of a service linked to channel attribute information of the current service may be provided by using the service list descriptor 'service_list_descriptor()'.

Accordingly, the digital broadcasting content transmitting apparatus 100 may transmit service identification information regarding a plurality of services provided via the current stream and linked information between the services for 3D reproduction by using the descriptors of the descriptor field 'descriptor()' 1242 of the BAT information 1200 and the descriptor field 'descriptor()' 1332 of the NIT information 1300.

Also, the digital broadcasting content transmitting apparatus 100 may generate descriptors including the 2D/3D content link information regarding all the services provided via the current network or the current bouquet, and may insert the descriptors into the descriptor field 'descriptor()' 1242 of the BAT information 1200 and the descriptor field 'descriptor()' 1332 of the NIT information 1300. For this, the integrated channel information and the link information between channels for the services provided via the current network or the current bouquet may be provided.

The digital broadcasting content receiving apparatus 200 may extract and read the 2D/3D content link information regarding all the services, which are provided via the current network or the current bouquet, from the descriptor field 'descriptor()' 1242 of the BAT information 1200 and the descriptor field 'descriptor()' 1332 of the NIT information 1300. Since the digital broadcasting content receiving apparatus 200 may read service type information regarding all the services, which are provided via the current network or the current bouquet, and linked service information based on the 2D/3D content link information, the integrated channel information and the link information between the channels for the services may be provided.

Table 31 shows a syntax of a descriptor field 'ts_channel_descriptor()' including both information regarding the current service and information regarding the linked service of the 2D/3D content link information.

**[Table 31]**

| **Syntax** | | |
|---|---|---|
| ts_channel_descriptor(){ | | |
| | descriptor_tag | |
| | descriptor_length | |
| | for (i=0 ; i<N ; i++){ | |
| | | current_service_id |
| | | current_service_type |
| | | current_3d_format |
| | | target_original_netwok_id |
| | | target_transport_stream_id |
| | | target_service_id |
| | | target_service_viewing_listed |
| | | target_service_simulcast |
| | | target_service_type |
| | | target_3d_format |
| | | reserved |
| } | | |

Since information regarding a current service and information regarding a linked service 'target_service' may be set for each current service 'current_service' by using a loop in the descriptor field 'ts_channel_descriptor()', the 2D/3D content link information regarding all the services provided through the current transport stream may be set.

A 'current_service_type' including service type information of the current service may be set in a similar manner as the '3d_service_type' shown in Table 22, and a 'current_3d_format' including the 3D content format information of the current service may be set in a similar manner as the '3d_format' shown in Table 23. A 'target_service_type' including the service type information of the linked service may be set in a similar manner as the '3d_service_link_type' shown in Table 24, and a 'target_3d_format' including the 3D content format information of the linked service may be set in a similar manner as the '3d_link_format' shown in Table 25.

The descriptor field 'ts_channel_descriptor()' shown in Table 31 shows an embodiment in which only information regarding the current service and the linked service in service units is included. Furthermore, the digital broadcasting content transmitting apparatus 100 may generate the descriptor including the 2D/3D content link information regarding all the services and events provided via the current network or the current bouquet, and may insert the generated descriptor into the descriptor field 'descriptor()' 1242 of the BAT information 1200 and the descriptor field 'descriptor()' 1332 of the NIT information 1300.

Thus, the digital broadcasting content receiving apparatus 200 may detect and read channel information regarding a plurality of services provided through the current stream and linked information between services to be reproduced in 3D from a predetermined descriptor of the descriptor field 'descriptor()' 1242 of the BAT information 1200 and the descriptor field 'descriptor()' 1332 of the NIT information 1300, and may display, on the EPG screen, the channel information between the services provided through the current stream and the service that may be reproduced in 3D.

FIG. 24 shows an EPG screen on which 3D content is displayed by using 2D/3D content identification information or 2D/3D content link information, according to an embodiment of the present invention.

A digital broadcasting content receiving apparatus 2400 may receive a digital broadcasting stream to restore and reproduce content, and may display an EPG screen 2420 on a content reproduction screen 2410 of the restored content.

When the digital broadcasting content receiving apparatus 2400 receives the digital broadcasting stream according to the ATSC format, PSIP information is extracted from the received digital broadcasting stream, information for constituting the EPG screen 2420 is described in the TVCT information 600, the EIT information 700, the ETT information 800, and the RRT information 900, and the STT information 1000 of the PSIP information.

Also, when the digital broadcasting stream is received according to the DVB format, the SI information is extracted from the received digital broadcasting stream, and information for constituting the EPG screen 2420 may be extracted from the BAT information 1200, the NIT information 1300, the SDT information 1400, and the EIT information 1500 of the SI information.

For example, the digital broadcasting content receiving apparatus 2400 may read channel numbers CH1, CH2, and CH3, event properties (Movie, Comedy, Soccer, Baseball, News, Music, Game), event starting time, a broadcasting time, and the like from the PSIP information according to the ATSC format or the SI information according to the DVB format, may constitute the EPG screen 2420, and may display the EPG screen 2420 on a content reproduction screen 2410.

The 2D/3D content identification information may be extracted from the TVCT information 600 of the PSIP information, the SDT information 1400 of the SI information, or the EIT information 1500. Also, the 2D/3D content link information may be extracted from the TVCT information 600 of the PSIP information, the SDT information 1400 of the SI information, or the EIT information 1500. The 2D/3D content link information may include not only information regarding linked content but also identification information of the current content.

Accordingly, the digital broadcasting content receiving apparatus 2400 may determine that an event 'Music 3D' 2430 of a channel 3 CH3 may be reproduced in 3D by using the 2D/3D content identification information or the 2D/3D content link information. The digital broadcasting content receiving apparatus 2400 may display, on the EPG screen 2420, a mark for identifying the event 'Music 3D' 2430 as 3D content.

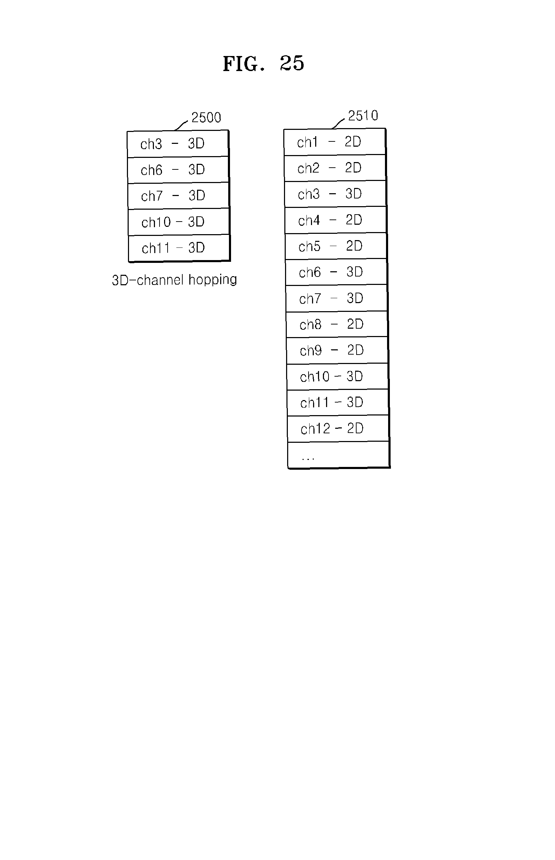

FIG. 25 is a diagram showing an EPG screen, which supports channel hopping between 3D channels configured by using the 2D/3D content identification information or the 2D/3D content link information, and a general EPG screen, according to an embodiment of the present invention.

When a 2D channel providing the 2D content and a 3D channel providing the 3D content are mixed and then provided via a broadcasting network, if a viewer often watches the 3D content while watching the 2D content or if the viewer often watches the 2D content while watching the 3D content due to frequent switching of channels, the viewer may not enjoy watching the TV. Also, even though the viewer desires to search for and watch only 3D channels, if all 2D channels are displayed on the EPG screen, the viewer may feel inconvenienced in using the EPG screen.

Accordingly, the digital broadcasting content receiving apparatus 200 may selectively display an EPG screen 2500 only of 3D channels comprised of only services that may be reproduced in 3D and a general EPG screen 2510 comprised of all services regardless of a 2D or 3D reproduction manner.

The digital broadcasting content receiving apparatus 200 may constitute the EPG screen 2500 only of 3D channels on which only 3D services are displayed, by using the 2D/3D content identification information or the 2D/3D content link information. Also, when there is a user's input for selecting only the 3D services on the EPG screen 2500 only of 3D channels, the digital broadcasting content receiving apparatus 200 may constitute the EPG screen 2500 only of 3D channels by using the 2D/3D content identification information or the 2D/3D content link information, and may configure a 3D channel hopping function for searching for and reproducing only the 3D services.

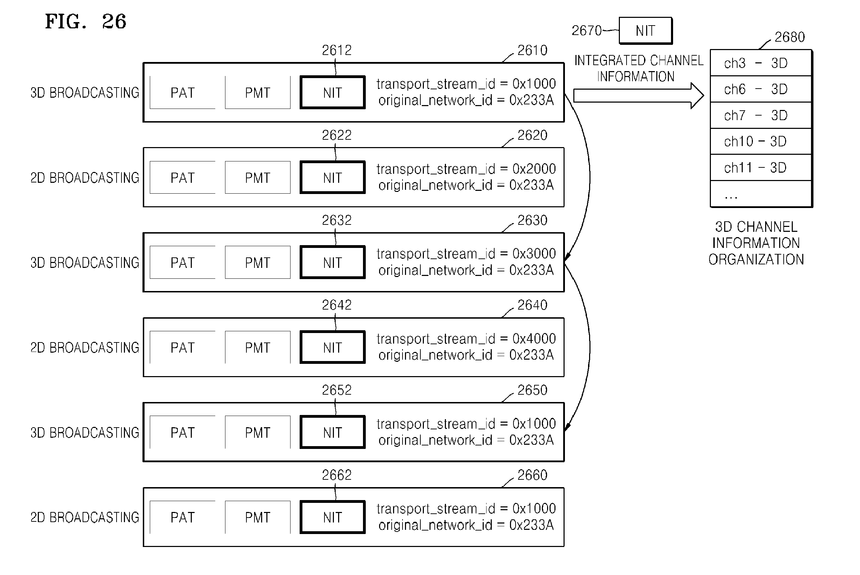

FIG. 26 is a diagram showing an EPG screen of 3D channels, which is configured based on the 2D/3D content link information inserted into the NIT information, according to an embodiment of the present invention.

A plurality of transport streams 2610, 2620, 2630, 2640, 2650, and 2660 are transmitted via the current network. NIT information 2670 includes information regarding the current network, and may include NIT information 2612, 2622, 2632, 2642, 2652, and 2662 according to transport streams for the respective transport streams 2610, 2620, 2630, 2640, 2650, and 2660.

The digital broadcasting content receiving apparatus 200 may extract channel attribute information and link information for 3D reproduction regarding all services included in the respective transport streams, from the NIT information 2612, 2622, 2632, 2642, 2652, and 2662 for the respective transport streams 2610, 2620, 2630, 2640, 2650, and 2660.

Thus, the channel attribute information and the link information regarding all the services of the transport streams 2610, 2620, 2630, 2640, 2650, and 2660 received via the current network may be extracted from the NIT information 2670. Accordingly, the integrated channel information regarding the current network may be provided from the NIT information 2670.

The digital broadcasting content receiving apparatus 200 may search for the transport streams 2610, 2630, and 2650 for 3D broadcasting based on the service type information extracted from the NIT information 2670. Accordingly, the digital broadcasting content receiving apparatus 200 may detect and read only channel information of the transport streams 2610, 2630, and 2650 that are identified to be 3D broadcasting content, may perform an internal 3D channel hopping function, and may constitute a 3D channel EPG screen 2680.

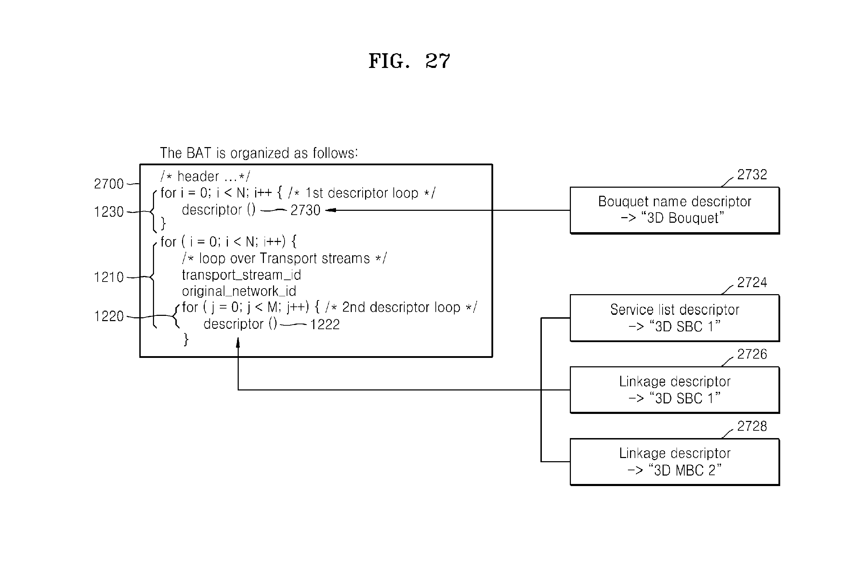

FIG. 27 is a diagram for describing a method of performing channel hopping between the 3D channels by using the 2D/3D content identification information or the 2D/3D content link information that is inserted as a descriptor of the BAT information, according to an embodiment of the present invention.

Information regarding a set of services included in a bouquet may be provided by using a first loop 1230, a second loop 1210, and a third loop 1220 in some regions 2700 of the BAT information 1200. In particular, since the BAT information 1300 includes information regarding the bouquet which is a set of a plurality of services, a 3D bouquet which is a set of 3D services is determined, and the BAT information 1200 may include information regarding the 3D services constituting the 3D bouquet.

The digital broadcasting content receiving apparatus 200 may read a bouquet name descriptor describing "3D Bouquet" which is a name of the current bouquet from a descriptor field 2730 of the first loop 1230 of the BAT information 1200.

Also, the digital broadcasting content receiving apparatus 200 may extract a service list descriptor 2724 and linkage descriptors 2726 and 2728 from a descriptor field 1222 of the third loop 1220 of the BAT information 1200. The service list descriptor 2724 and the linkage descriptors 2726 and 2728 may be set in a similar manner as the 'service_list_descriptor' and the 'linkage_descriptor' described above with reference to FIG. 19 and Table 23, 28, and 30.

The digital broadcasting content receiving apparatus 200 may read channel information "3D SBC 1" of the current service from the service list descriptor 2724, and may read channel information "3D SBC 1" and "3D MBC 2" of a linked service of the current service from the linkage descriptors 2726 and 2728.

Accordingly, since the digital broadcasting content receiving apparatus 200 may search for the 3D bouquet and channels of the 3D service by using the channel information and link information extracted from the BAT information 1200, internal 3D channel hopping may be performed.

Hereinafter, various embodiments of the EPG 3D reproduction information will be described in detail.

When the digital broadcasting content transmitting apparatus 100 provides digital broadcasting content according to the ATSC format, the digital broadcasting content transmitting apparatus 100 may insert a descriptor including the EPG 3D reproduction information into at least one from among the descriptor field 'descriptor()' 690 of the TVCT information 600, the descriptor field 'descriptor()' 720 of the EIT information 700, the 'ETM_id' 820 of the ETT information 800, the descriptor field 'descriptor()' 920 of the RRT information 900, and the descriptor field 'descriptor()' 1020 of the STT information 1000, and may transmit the descriptor.

When the digital broadcasting content transmitting apparatus 100 provides the digital broadcasting content according to the DVB format, the digital broadcasting content transmitting apparatus 100 may insert a descriptor including the EPG 3D reproduction information into at least one from among the descriptor field 'descriptor()' 1332 of the NIT information 1300, the descriptor field 'descriptor()' 1422 of the SDT information 1400, and the descriptor field 'descriptor()' 1544 of the EIT information 1500 based on the DVB format, and may transmit the descriptor.

The digital broadcasting content transmitting apparatus 100 may insert the EPG 3D reproduction information for reproducing the EPG screen in 3D into the PSIP information or the SI information. The EPG 3D reproduction information, which is information regarding depth for reproducing the EPG screen in 3D, may be used in various ways such as depth, disparity map, binocular parallax, or offset.

Also, the digital broadcasting content receiving apparatus 200 may extract the EPG screen and the EPG 3D reproduction information by gathering sections from the transport streams received according to the ATSC format, may change the 2D EPG screen into the 3D EPG screen by using the EPG 3D reproduction information, and may reproduce the 3D EPG screen.

The digital broadcasting content transmitting apparatus 100 may generate a descriptor including the EPG 3D reproduction information. The TVCT information 600, the RRT information 900, the STT information 1000, and the EIT information 700, except for the ETT information 800, of the PSIP information include the descriptor field 'descriptor()'. The digital broadcasting content transmitting apparatus 100 may insert a 3D EPG descriptor including the EPG 3D reproduction information into a descriptor field of the PSIP information. Although the ETT information 800 does not have a descriptor field, the ETT information 800 is linked to the TVCT information 600 or the EIT information 700 via the 'ETM_id', and the digital broadcasting content transmitting apparatus 100 may be inherit the 3D EPG descriptor of the linked information.

Table 32 shows a syntax of the 3D EPG descriptor.

**[Table 32]**

| **Syntax** | |
|---|---|
| 3D_EPG descriptor() { | |
| | descriptor_tag |
| | descriptor_length |
| | ***3D_EPG_offset*** |
| | ***Video_Flat*** |
| | reserved |
| | additional_data() |
| } | |

The '3D_EPG_offset' includes offset information to be displayed on the EPG screen by the PSIP information including a 3D EPG descriptor'3D_EPG descriptor()'.

The 'Video_Flat' includes, when the EPG screen is reproduced in 3D, video 2D reproduction information representing whether to convert a video of an event that is now being broadcasted into a 2D reproduction mode and to reproduce the converted video. Table 33 shows a semantic of video 2D reproduction information 'Video_Flat'.

**[Table 33]**

| **Video_Flat** | **Meaning** |
|---|---|
| 0 | maintain 3D broadcasting image |
| 1 | convert broadcasting image into 2D |

In order for the digital broadcasting content receiving apparatus 200 to generate the left-view EPG screen and the right-view EPG screen of the 3D EPG screen based on the EPG 3D reproduction information, the '3D_EPG_offset' may be differently applied to the 2D EPG screen according to viewpoints.

For example, if the 3D EPG offset is a left and right moving distance of a pixel, the digital broadcasting content receiving apparatus 200 may generate the left-view EPG screen by moving the 2D EPG screen by an offset along an x-axis in a negative or positive direction, and may generate the right-view EPG screen by an offset in a positive direction.

Alternatively, if the 3D EPG offset is a disparity between the left view and the right view, the digital broadcasting content receiving apparatus 200 may generate the right-view EPG screen by fixing the 2D EPG screen to the left-view EPG screen and moving the 2D EPG screen by an offset along an x-axis in a negative or positive direction. A method of generating the 3D EPG screen by the digital broadcasting content receiving apparatus 200 may vary according to characteristics of the 3D EPG offset.

When the digital broadcasting content receiving apparatus 200 receives the digital broadcasting content according to the ATSC format, the digital broadcasting content receiving apparatus 200 may extract the descriptor including the EPG 3D reproduction information from at least one from among the descriptor field 'descriptor()' 690 of the TVCT information 600, the descriptor field 'descriptor()' 720 of the EIT information 700, the 'ETM_id' 820 of the ETT information 800, the descriptor field 'descriptor()' 920 of the RRT information 900, and the descriptor field 'descriptor()' 1020 of the STT information 1000, may read the EPG 3D reproduction information, and may reproduce the EPG screen in 3D.

When the digital broadcasting content receiving apparatus 200 receives the digital broadcasting content according to the DVB format, the digital broadcasting content receiving apparatus 200 may extract the descriptor including the EPG 3D reproduction information from at least one from among the descriptor field 'descriptor()' 1332 of the NIT information 1300, the descriptor field 'descriptor()' 1422 of the SDT information 1400, and the descriptor field 'descriptor()' 1544 of the EIT information 1500 based on the DVB format, may read the EPG 3D reproduction information, and may reproduce the EPG screen in 3D.

The digital broadcasting content receiving apparatus 200 may reproduce the EPG screen in 3D at an exact location based on the EPG 3D reproduction information so that a viewer does not experience a visual inconvenience.

Hereinafter, the 3D channel bonding information representing linked information between channels, when at least two streams constituting the 3D content is transmitted and received via at least one channel, will be described in detail, .

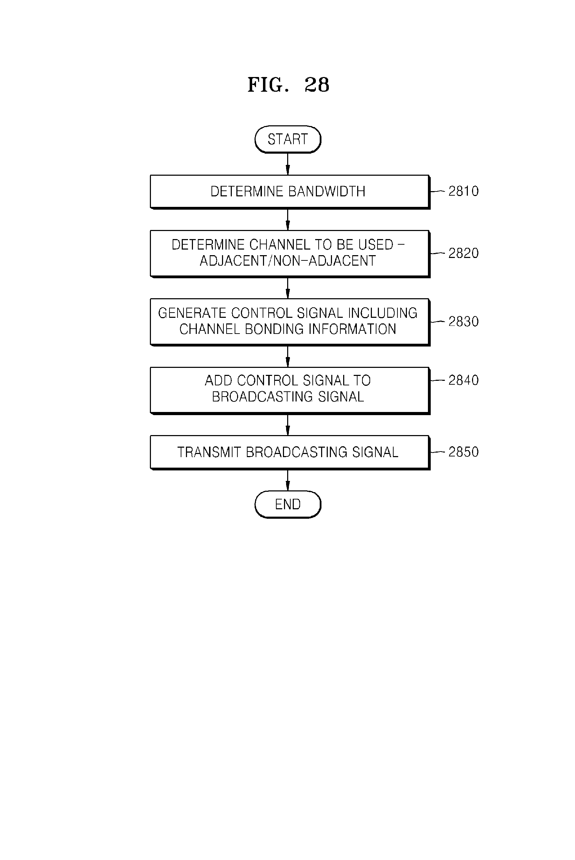

FIG. 28 is a flowchart for describing a method of determining a linked channel for transmitting the 3D content of the digital broadcasting content transmitting apparatus 100, according to an embodiment of the present invention.

When the digital broadcasting content transmitting apparatus 100 transmits the 3D content or ultra definition (UD) content, an amount by which data is transmitted is greater than that of a digital broadcasting system of high definition (HD) content, and thus there is a need to improve data compressibility or increase a bandwidth of a channel for transmitting the data.

The digital broadcasting content transmitting apparatus 100 may extend, even though a bandwidth of one channel is fixed, a channel bandwidth for transmitting data by using a plurality of channels, so as to transmit the digital broadcasting content providing the 3D broadcasting content.

Thus, in operation 2810, the digital broadcasting content transmitting apparatus 100 may determine a total bandwidth for transmitting the current content and may determine the number of channels needed.

In operation 2820, when the digital broadcasting content transmitting apparatus 100 is to transmit the current content by using at least two channels, the digital broadcasting content transmitting apparatus 100 determines whether to select content linked to the current content by using a channel adjacent to the current channel or a channel not adjacent to the current channel. For example, when the digital broadcasting content transmitting apparatus 100 is based on the ATSC format, the digital broadcasting content transmitting apparatus 100 may not support a single frequency network (SFN) system, and thus a non-adjacent channel may be selected as the linked channel.

In operation 2830, the digital broadcasting content transmitting apparatus 100 may generate a control signal of a digital broadcasting signal including the 3D channel bonding information.

The 3D channel bonding information may include information regarding whether a plurality of channels are coupled to one another, information regarding whether the current channel is a main channel, information regarding a size of the bandwidth, information regarding whether the linked channel is an adjacent channel, information regarding whether, if the linked channel is an adjacent channel, the linked channel is a previous or next channel, and information regarding, if the linked channel is a non-adjacent channel, a frequency of the linked channel.

In operation 2840, the digital broadcasting content transmitting apparatus 100 may add the control signal, into which the 3D channel bonding information is inserted, to the digital broadcasting signal. For example, when the digital broadcasting content transmitting apparatus 100 is based on the ATSC format, the control signal including the 3D channel bonding information may be inserted into the VSB data field synchronization signal based on the ATSC format. Alternatively, when the digital broadcasting content transmitting apparatus 100 is based on the DVB format, the control signal including the 3D channel bonding information may be inserted into the reserved field of the TPS information based on the DVB format or the reserved field of the L1 signaling data.

In operation 2850, the digital broadcasting content transmitting apparatus 100 may transmit the digital broadcasting signal into which the control signal including the 3D channel bonding information is inserted.

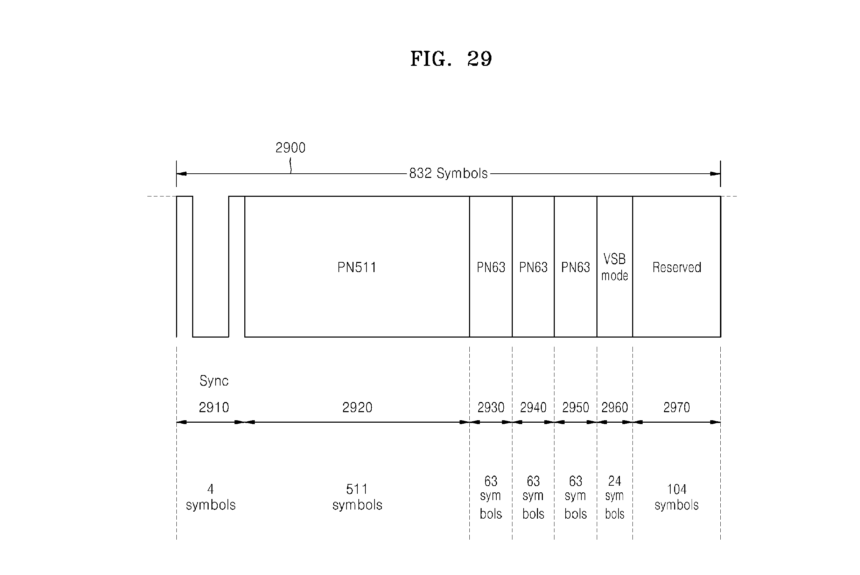

FIG. 29 is a diagram showing a structure of the VSB data field synchronization signal according to the ATSC format, according to an embodiment of the present invention.

When the digital broadcasting content transmitting apparatus 100 receives the digital broadcasting content according to the ATSC format, the broadcasting content may be modulated into a VSB signal format, may be carried at a radio frequency (RF) frequency, and may be transmitted.

A size of one segment of a VSB data field synchronization signal 2900 is 832 symbols, and the VSB data field synchronization signal 2900 is comprised of a segment synchronization signal 2910, random bit-strings 2920, 2930, 2940, and 2950, VSB mode information 2960, and reserved field 2970. The digital broadcasting content transmitting apparatus 100 may insert the 3D channel bonding information into the reserved field 2970 of the VSB data field synchronization signal 2900 and may transmit the VSB data field synchronization signal 2900.

Also, the digital broadcasting content receiving apparatus 200 may receive a VSB signal transmitted via an RF channel, may extract the 3D channel bonding information from the reserved field 2970 of the VSB data field synchronization signal 2900, may read the 3D channel bonding information, may search for a linked channel of the current channel, and may receive content that may be reproduced in 3D via the current channel and the linked channel.

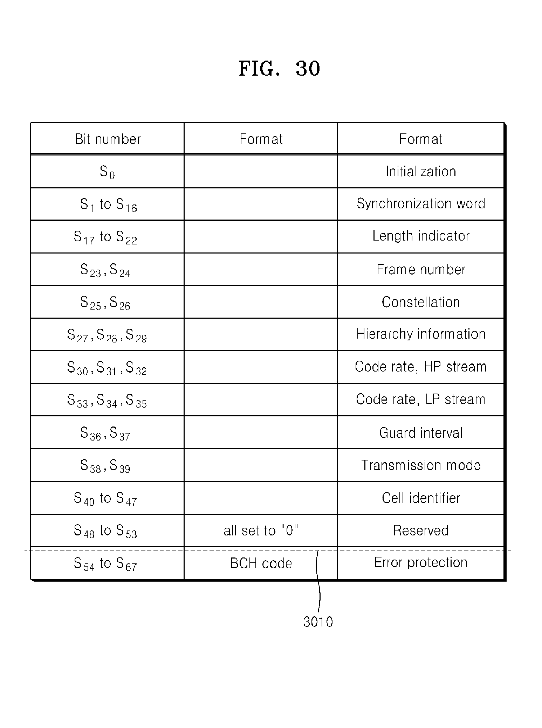

FIG. 30 is a diagram showing a structure of TPS information according to the DVB format, according to an embodiment of the present invention.

When the digital broadcasting content transmitting apparatus 100 transmits and receives the broadcasting content according to the DVB format, the digital broadcasting content transmitting apparatus 100 may transmit the TPS information, which is a control signal.

A reserved bit-string 3010 including a 48th bit to a 53rd bit in the TPS information of the TPS information is allocated to the reserved bits. The digital broadcasting content transmitting apparatus 100 may insert the descriptor including the 3D channel bonding information into the reserved bit-string 3010 of the TPS information. The digital broadcasting content receiving apparatus 200 may detect the descriptor including the 3D channel bonding information from the reserved bit-string 3010 of the TPS information and may determine the linked channel of the current channel.

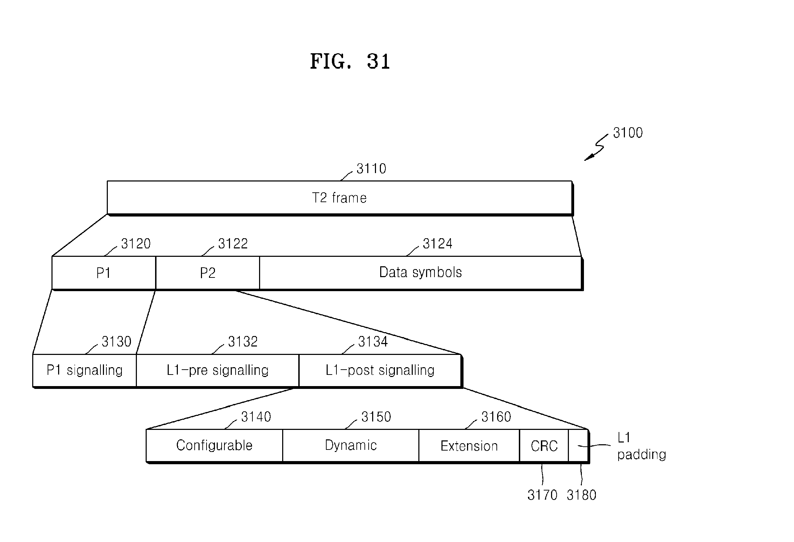

FIG. 31 is a diagram showing a structure of the L1 signaling data according to the DVB format, according to an embodiment of the present invention.

A T2 frame 3110 transmitted according to the DVB format is comprised of a P1 symbol zone 3120, a P2 symbol zone 3122, and a data symbol zone 3124. The P1 symbol zone 3120 is comprised of a P1 signaling zone 3130, and the P2 symbol zone 3122 is comprised of an L1-pre signaling zone 3132 and an L1-post signaling zone 3134. The L1-post signaling zone 3134 is comprised of a configurable zone 3140, a dynamic zone 3150, an extension zone 3160, a CRC zone 3170, and an L1 padding zone 3180.

The digital broadcasting content transmitting apparatus 100 may insert the 3D channel bonding information to reserved field of the L1-pre signaling zone 3132 and the L1-post signaling zone 3134. The digital broadcasting content receiving apparatus 200 may detect the 3D channel bonding information from the reserved field of the L1-pre signaling zone 3132 and then may search for a linked channel.

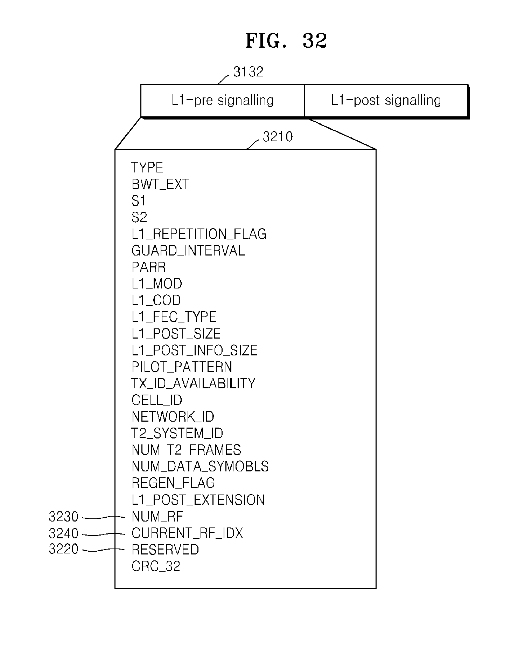

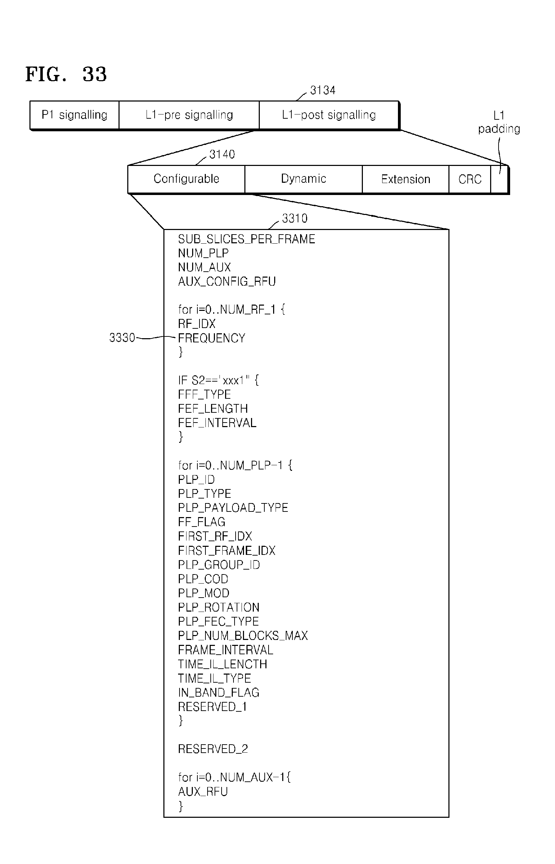

FIGS. 32 and 33 show signaling fields of L1 pre signaling data and L1 post signaling data.

When the digital broadcasting content transmitting apparatus 100 transmits the 3D content according to a DVB-T2 format via non-adjacent channels that are coupled to one another, the digital broadcasting content transmitting apparatus 100 may transmit the 3D channel bonding information by using the L1 pre signaling data and the L1 post signaling data.

The digital broadcasting content transmitting apparatus 100 may insert the 3D channel bonding information into reserved field 'RESERVED' 3220 from among a plurality of signaling fields 3210 of the L1-pre signaling zone 3132. In particular, information regarding a frequency of the linked channel, from among the 3D channel bonding information, may be inserted into 'FREQUENCY' 3330 from among the signaling fields 3210 of the configurable zone 3140 of the L1-post signaling zone 3134.

Also, the digital broadcasting content transmitting apparatus 100 may insert link information regarding a number of linked channels and information regarding whether the current channel is a primary channel, from among the 3D channel bonding information, into 'NUM_RF' 3230 and 'CURRENT_RF_IDX' 3240 from among the signaling fields 3210 of the L1-pre signaling zone 3132.

The digital broadcasting content receiving apparatus 200 may detect the 3D channel bonding information from the reserved field 'RESERVED' 3220 of the L1-pre signaling zone 3132. Also, the digital broadcasting content receiving apparatus 200 may read the information regarding the frequency of the linked channel from the 'FREQUENCY' 3330 of the configurable zone 3140 of the L1-post signaling zone 3134.

Also, the digital broadcasting content receiving apparatus 200 may read the information regarding the number of linked channels and the information regarding whether the current channel is a primary channel, from among the 3D channel bonding information, from the 'NUM_RF' 3230 and the 'CURRENT_RF_IDX' 3240 of the L1-pre signaling zone 3132.

The digital broadcasting content receiving apparatus 200 may detect at least one from among information 'ch_bonding_flag' regarding whether a plurality of channels are coupled to one another, information 'primary_ch_flag' regarding whether the current channel is a primary channel, information 'ch_extension_num' regarding whether the linked channel is an adjacent channel, information 'previous_ch_flag' and 'next_ch_flag' regarding, if the current channel is an adjacent channel, whether the adjacent channel is a previous or next channel, and information 'ch_frequency' regarding the frequency of the linked channel from a VSC data field synchronization signal according to the ATSC format, the TPS information according to the DVB format, and a reserved field of the L1 signaling data, and then may analyze a bonding relationship between the channels.

For example, when the information 'ch_bonding_flag' has a value of 1, it may be determined that a plurality of channels are coupled to one another. Also, when the information 'ch_bonding_flag' has a value of 0, it may be analyzed that the channels are not coupled to one another.

When the information 'primary_ch_flag' has a value of 1, it may be analyzed that the current channel is a primary channel. Also, when the information 'primary_ch_flag' has a value of 0, it may be analyzed that the current channel is an additional channel for transmitting an additional image.

When the information 'ch_extension_num' has a value of '00', it may be analyzed that a total bandwidth corresponds to a bandwidth of a single channel. Also, when the information 'ch_extension_num' has a value of '01, it may be analyzed that the total bandwidth corresponds to bandwidths of two channels. Also, when the information 'ch_extension_num' has a value of '11', it may be analyzed that the total bandwidth corresponds to bandwidths of four channels.

When the information 'adjacent_ch_bonding_flag' has a value of '1', it may be analyzed that the current channel is coupled to the adjacent channel. Also, when the information 'adjacent_ch_bonding_flag' has a value of '0', it may be analyzed that the current channel is coupled to a non-adjacent channel.

When the information 'adjacent_ch_bonding_flag' has a value of '1', the information 'previous_ch_flag' and the information 'next_ch_flag' may be detected. When the information

'previous_ch_flag' has a value of '1', it may be analyzed that the current channel is coupled to the previous channel. Also, when the 'next_ch_flag' has a value of '1', it may be analyzed that the current channel is coupled to the next channel.

When the information 'adjacent_ch_bonding_flag' has a value of '0', the information 'ch_frequency' may be detected, wherein the information 'ch_frequency' may represent a frequency of a non-adjacent linked channel that is coupled to the current channel.

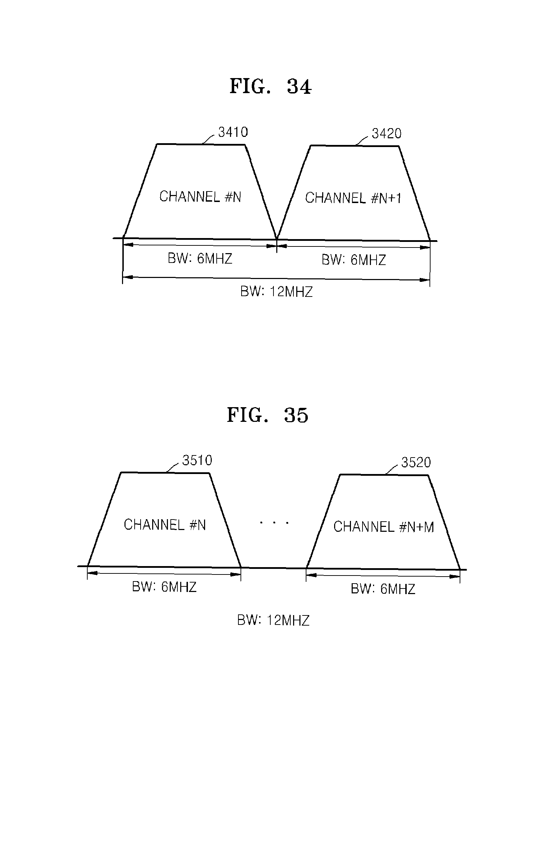

FIGS. 34 and 35 are diagrams for describing a case where the linked channel is adjacent to the current channel and a case where the linked channel is not adjacent to the current channel, respectively, according to an embodiment of the present invention.

FIG. 34 shows a case where a case where a current channel 3410 is coupled to a linked channel 3420 that is adjacent to the current channel 3410. The current channel 3410 and the linked channel 3420 have a bandwidth of 6 MHz, and thus 3D broadcasting content or UD-level broadcasting content may be received and transmitted by using a total bandwidth of 12 MHz due to channel coupling.

The current channel 3410 is a primary channel coupled to the one linked channel 3420, which is a next channel adjacent to the current channel 3410. The linked channel 3420 is an additional information channel coupled to the one current channel 3410, which is a previous channel adjacent to the linked channel 3420. Thus, the 3D channel bonding information regarding the current channel 3410 and the linked channel 3420 may be set as shown in Table 34.

**[Table 34]**

| 3D channel bonding information | Value of the current channel 3410 | Value of the linked channel 3420 |
|---|---|---|
| ch_bonding_flag | 1 | 1 |
| ch_extension_num | 1 | 1 |
| adjacent_ch_bonding_flag | 1 | 1 |
| primary_ch_flag | 1 | 0 |
| previous_ch_flag | 0 | 1 |
| next_ch_flag | 1 | 0 |

FIG. 35 shows a case where a current channel 3510 is coupled to a linked channel 3520 that is not adjacent to the current channel 3510. The current channel 3510 and the linked channel 3520 have a bandwidth of 6 MHz, and thus digital broadcasting content may be received and transmitted by using a total bandwidth of 12 MHz due to channel coupling.

The current channel 3510 is a primary channel coupled to the one linked channel 3520 that is not adjacent to the current channel 3510. The linked channel 3520 is an additional information channel coupled to the one current channel 3510 that is not adjacent to the linked channel 3520. Thus, the 3D channel bonding information regarding the current channel 3510 and the linked channel 3520 may be set as shown in Table 35.

**[Table 35]**

| 3D channel bonding information | Value of the current channel 3510 | Value of the linked channel 3520 |
|---|---|---|
| ch_bonding_flag | 1 | 1 |
| ch_extension_num | 1 | 1 |
| adjacent_ch_bonding_flag | 0 | 0 |
| primary_ch_flag | 1 | 0 |
| ch_frequency | RF value of the linked channel 3520 | RF value of the current channel 3510 |

The 'ch_frequency' may be read from the PSIP information or the SI information of the transport stream.

Also, the digital broadcasting content transmitting apparatus 100 may insert the 3D channel bonding information into at least one descriptor field from among the PMT information according to the ATSC format, the VCT information, the NIT information according to the DVB format, and the SDT information. A descriptor including at least one from among 'ch_bonding_flag' information, 'primary_ch_flag' information, 'ch_extension_num' information, 'adjacent_ch_bonding_flag' information, 'previous_ch_flag' information, 'next_ch_flag' information, and 'ch_frequency' information may be inserted into the descriptor field of the PMT information, the VCT information, the NIT information, or the SDT information.

Also, the 'ch_bonding_flag' information, the 'primary_ch_flag' information, the 'ch_extension_num' information, the 'adjacent_ch_bonding_flag' information, the 'previous_ch_flag' information, and the 'next_ch_flag' information may be inserted into the VSB data field synchronization signal or the TPS information. Also, the 'ch_frequency' information may be inserted into the descriptor field of the PMT information or the VCT information according to the ATSC format, or the descriptor field of the NIT information or the SDT information according to the DVB format.

In particular, when the 3D channel bonding information is transmitted by using the descriptor field of the VCT information or the SDT information, a channel bonding service type 'channel bonding service' may be added to reserved field of service type information 'service_type' of the VCT information or the SDT information.

Also, when the 3D channel bonding information is transmitted by using the descriptor field of the NIT information, the channel bonding service type 'channel bonding service' may be added to reserved field of the linkage type information 'linkage_type' of the linkage descriptor 'linkage_descriptor' of the NIT information.

Accordingly, the digital broadcasting content receiving apparatus 200 may extract and read the 3D channel bonding information from at least one descriptor field from among the PMT information and the VCT information according to the ATSC format, and the NIT information and the SDT information according to the DVB format. Then, the digital broadcasting content receiving apparatus 200 may analyze a bonding relationship between the channels and then may receive the 3D content.

Since the digital broadcasting content transmitting apparatus 100 and the digital broadcasting content receiving apparatus 200 receive and transmit broadcasting streams by simultaneously using a plurality of channels, bandwidths of the channels are extended, thereby improving a data transmission rate. Also, a greater amount of data may be received and transmitted not only through a linkage between adjacent channels but also through a linkage between non-adjacent channels.

The digital broadcasting content transmitting apparatus 100 and the digital broadcasting content receiving apparatus 200 may add the 3D channel bonding information to a control signal according to a conventional communication standard, so that even a conventional broadcasting system not capable of analyzing the 3D channel bonding information may ensure downward compatibility to receive digital broadcasting according to the control signal according to the conventional communication standard.

Also, the digital broadcasting content transmitting apparatus 100 may allow the digital broadcasting content receiving apparatus 200 to recognize a bandwidth of a channel to which a broadcasting stream is transmitted, by using a control signal such as the VSB data field synchronization signal according to the ATSC format or the TPS information according to the DVB format. Thus, the digital broadcasting content receiving apparatus 200 may analyze a bonding relationship between channels in a shorter time to search for the linked channel required to reproduce the current content of the current channel in 3D, and then may receive the linked content.

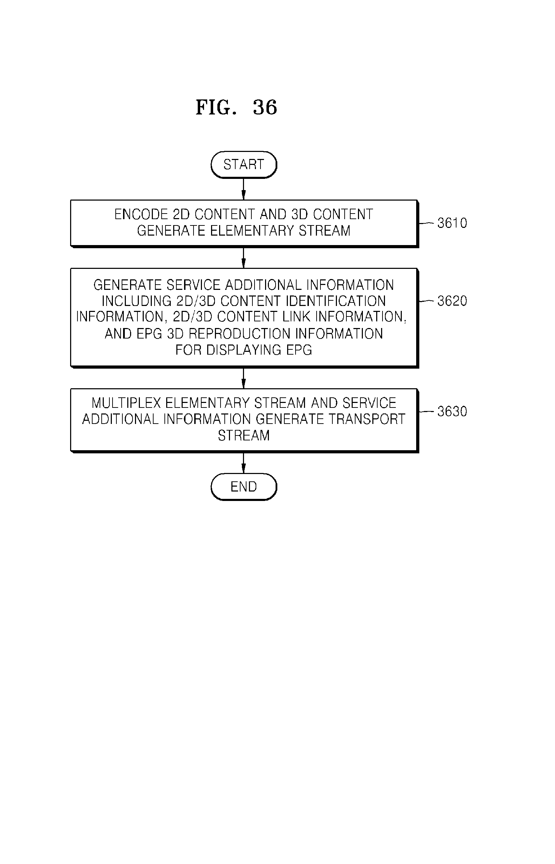

FIG. 36 is a flowchart for describing a method of transmitting the digital broadcasting content, according to an embodiment of the present invention.

In operation 3610, content including at least one from among 2D content and 3D content is encoded, and thus an elementary stream including encoded data of the content is generated.

In operation 3620, the service additional information including at least one from among the 2D/3D content identification information, the 2D/3D content link information, and the EPG 3D reproduction information of the digital broadcasting content may be generated. The 2D/3D content identification information, the 2D/3D content link information, and the EPG 3D reproduction information may be set in service units or event units.

The service additional information includes the PSIP information according to the ATSC format or the SI information according to the DVB format. The 3D channel bonding information may be inserted into the service additional information. In particular, the 2D/3D content identification information, the 2D/3D content link information, the EPG 3D reproduction information, the 3D channel bonding information, etc. of the digital broadcasting content may be inserted into the service additional information including the EPG information of the PSIP information according to the ATSC format and the SI information according to the DVB format.

In operation 3630, when the elementary stream and the service additional information are multiplexed, the transport stream for transmitting the digital broadcasting content is generated. Also, the 3D channel bonding information may be inserted into a control signal of a channel modulation signal in which the transport stream is carried, and then may be transmitted.

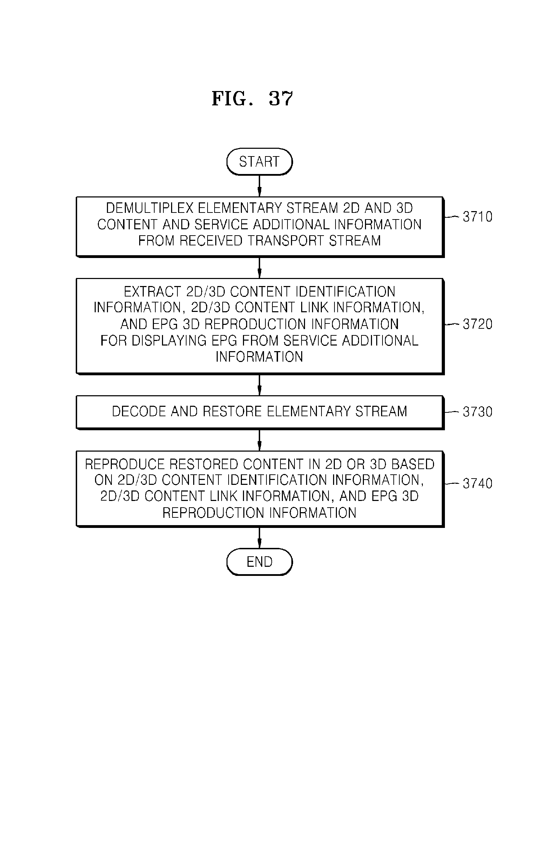

FIG. 37 is a flowchart for describing a method of receiving the digital broadcasting content, according to an embodiment of the present invention.

In operation 3710, the elementary stream, into which the encoded data of the content including at least one from among the 2D content and the 3D content, and the service additional information regarding the digital broadcasting content are demultiplexed. Also, the 3D channel bonding information may be extracted from a control signal of a channel demodulation signal in which the transport stream is received.

In operation 3720, at least one from among the 2D/3D content identification information, the 2D/3D content link information, and the EPG 3D reproduction information may be extracted from the service additional information. Also, the 3D channel bonding information may be extracted from the service additional information.

The 2D/3D content identification information, the 2D/3D content link information, the EPG 3D reproduction information, the 3D channel bonding information, etc. of the digital broadcasting content may be extracted from the service additional information including the EPG information of the PSIP information according to the ATSC format or the SI information according to the DVB format.

In operation 3730, the encoded data of the content is extracted from the elementary stream and then decoded, and thus the content is restored.

In operation 3740, the restored content and the EPG screen are reproduced in 2D or 3D based on at least one from among the 2D/3D content identification information, the 2D/3D content link information, and the EPG 3D reproduction information. Also, information regarding whether the current content is 2D content or 3D content may be displayed on the EPG screen.

It may be identified whether each service or each event is content that may be reproduced in 3D based on the 2D/3D content identification information or the 2D/3D content link information. Also, it may be displayed on the EPG screen whether each service or each event is 2D broadcasting content or 3D broadcasting content.

Also, since services or events, which are linked to one another to be reproduced in 3D in service units or event units, may be detected based on the 2D/3D content link information, a 3D channel EPG screen comprised of only a channel providing a 3D service or a 3D event may be configured.

Also, the 3D video content and the EPG screen may be reproduced in 3D based on the EPG 3D reproduction information.

The digital broadcasting content transmitting apparatus 100 and the digital broadcasting content receiving apparatus 200 may add the 2D/3D content identification information, the 2D/3D content link information, the EPG 3D reproduction information, or the 3D channel bonding information to a space of the service additional information or the control signal according to the conventional communication standard. Accordingly, even though a conventional broadcasting receiving system may not analyze the 2D/3D content identification information, the 2D/3D content link information, the EPG 3D reproduction information, or the 3D channel bonding information that is newly allocated or defined, the broadcasting receiving system may receive digital broadcasting by analyzing the service additional information or the control signal according to the conventional communication standard, and thus downward compatibility between the broadcasting systems may be ensured.

In the above description, various examples of using the 2D/3D content identification information, the 2D/3D content link information, the EPG 3D reproduction information, and the 3D channel bonding information have been described with reference to FIGS. 1 to 37 and Tables 1 to 35. However, the above-described examples are just embodiments for describing a principle of the present invention, and thus the 2D/3D content identification information, the 2D/3D content link information, the EPG 3D reproduction information, or the 3D channel bonding information are not limited to those shown in FIGS. 1 to 37 and Tables 1 to 35.

It would be interpreted by one of ordinary skill in the art that the block diagrams described in the embodiments of the present invention conceptually indicate a circuit for realizing principles of the present invention. Similarly, it would be obvious to one of ordinary skill in the art that a predetermined flowchart, a flow graph, a state disparity diagram, and a pseudo code are substantially expressed in a computer-readable recording medium and indicate various processes executed by a computer or a processor, even if the computer or processor is not explicitly shown. Accordingly, the embodiments of the present invention can be written as computer programs and can be implemented in general-use digital computers that execute the programs using a computer-readable recording medium. Examples of the computer-readable recording medium include magnetic storage media (e.g., ROM, floppy disks, hard disks, etc.), optical recording media (e.g., CD-ROMs, or DVDs), etc.

The functions of various elements shown in diagrams may be provided by using not only hardware for executing software by being linked to suitable software, but also exclusive hardware. When the functions are provided by a processor, the functions may be provided by a single exclusive processor, a single common processor, or a plurality of individual processor, wherein some processors are shared. Also, terms 'processor' or 'controller' shall not be interpreted to exclusively indicate hardware for executing software, and may unlimitedly and implicitly include digital signal processor (DSP) hardware, read-only memory (ROM) for storing software, random access memory (RAM), and nonvolatile storage devices.

In the claims, an element expressed as a unit for performing a certain function includes a predetermined method of performing the certain function, and may include a combination of circuit elements for performing the certain function, or software in a predetermined form including firmware or microcode combined to a suitable circuit for executing software for performing the certain function.

In the present specification, 'an embodiment' and other modified expressions mean that a certain feature, structure, and characteristic are included in at least one embodiment of the present invention. Accordingly, the expression "an embodiment" and other modified examples in the present specification may not denote the same embodiment.

In the present specification, the expression "at least one among A and B" is used to include a selection of only A, only B, or both A and B. Further, the expression "at least one among A through C" may be used to include a selection of only A, only B, only C, only A and B, only B and C, or all of A through C. One of ordinary skill in the art would be able to clearly interpret the similar expression with more elements.

The embodiments of the present invention have been described above.

While this invention has been particularly shown and described with reference to preferred embodiments thereof, it will be understood by those of ordinary skill in the art that various changes in form and details may be made therein without departing from the spirit and scope of the invention as defined by the appended claims. The embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of transmitting digital broadcasting content for providing 2D content or 3D content, the method comprising:
encoding content comprising at least one from among the 2D content and the 3D content and generating an elementary stream comprising encoded data of the content;
generating service additional information comprising electronic program guide (EPG) information of the digital broadcasting content, and inserting at least one, into the service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and
multiplexing the elementary stream and the service additional information and then generating a transport stream.

2. The method of claim 1, wherein the generating of the service additional information comprises:
determining at least one from among the 2D/3D content identification information regarding current content in service units or event units of the digital broadcasting content, the 2D/3D content link information, and the EPG 3D reproduction information; and
inserting the determined information into the service additional information.

3. The method of claim 2, wherein the generating of the service additional information comprises inserting at least one from among the 2D/3D content identification information, the 2D/3D content link information, and the EPG 3D reproduction information into at least one from among virtual channel table (VCT) information, event information table (EIT) information, extended text table (ETT) information, rating region table (RRT) information, and system time table (STT) information of program specific information protocol (PSIP) information according to an advanced television systems committee (ATSC) format, and bouquet association table (BAT) information, network information table (NIT) information, service description table (SDT) information, and event information table (EIT) information of service information (SI) information according to a digital video broadcasting (DVB) format.

4. The method of claim 1, further comprising determining a linked channel for transmitting linked 3D content linked to the current content transmitted via a current channel, wherein the generating of the service additional information comprises inserting 3D channel bonding information representing information regarding a bonding relationship between the current channel and the linked channel into the service additional information.

5. The method of claim 4, wherein the generating of the service additional information comprises inserting the 3D channel bonding information into at least one from among a field synchronization signal of a vestigial side band (VSB) data field synchronization signal according to the ATSC format and PSIP information, and transmission parameter signaling (TPS) information according to the DVB format, L1 signaling data, and the SI information.

6. A method of receiving digital broadcasting content for providing 2D content or 3D content, the method comprising:
demultiplexing an elementary stream comprising encoded data of content comprising at least one from among the 2D content and the 3D content and service additional information regarding the digital broadcasting content from a received transport stream;
extracting, from the service additional information, electronic program guide (EPG) information for constituting an EPG screen of the digital broadcasting content, and at least one from among 2D/3D content identification information representing a method of reproducing the 2D content or the 3D content, 2D/3D content link information representing a relationship between the 2D content and the 3D content, and EPG 3D reproduction information for reproducing the EPG screen in 3D;
restoring the content by extracting the encoded data of the content and decoding the extracted data; and
reproducing the restored content and the EPG screen in 2D or 3D based on at least one from among the 2D/3D content identification information, the 2D/3D content link information, and the EPG 3D reproduction information.

7. The method of claim 6, wherein the extracting from the service additional information comprises extracting at least one, from the service additional information, from among the 2D/3D content identification information regarding current content in service units or event units of the digital broadcasting content, the 2D/3D content link information, and the EPG 3D reproduction information, wherein the reproducing of the restored content and the EPG screen comprises displaying on the EPG screen whether the current content is the 2D content or the 3D content based on at least one from among the 2D/3D content identification information, the 2D/3D content link information, and the EPG 3D reproduction information.

8. The method of claim 7, wherein the extracting from the service additional information comprises:
extracting at least one from among the 2D/3D content identification information, the 2D/3D content link information, and the EPG 3D reproduction information from at least one from among virtual channel table (VCT) information, event information table (EIT) information, extended text table (ETT) information, rating region table (RRT) information, and system time table (STT) information of program specific information protocol (PSIP) information according to an advanced television systems committee (ATSC) format and from among bouquet association table (BAT) information, network information table (NIT) information, service description table (SDT) information, and event information table (EIT) information of SI information according to a digital video broadcasting (DVB) format.

9. The method of claim 7, wherein the reproducing of the restored content and the EPG screen comprises reading at least one from among the 2D/3D content identification information and the 2D/3D content link information, selecting 3D content in at least one unit from among channel units, service units, and event units, and displaying 3D service information including the selected 3D content on the EPG screen.

10. The method of claim 6, further comprising:
extracting 3D channel bonding information, from the service additional information, representing information regarding a bonding relationship between a linked channel, for transmitting linked 3D content linked to current content transmitted via the current channel, and the current channel; and
detecting the linked channel based on the 3D channel bonding information.

11. The method of claim 10, wherein the extracting of the 3D channel bonding information comprises extracting the 3D channel bonding information from at least one from among a field synchronization signal of a vestigial side band (VSB) data field synchronization signal and program specific information protocol (PSIP) information according to an advanced television systems committee (ATSC) format and transmission parameter signaling (TPS) information, L1 signaling data, and SI information according to a digital video broadcasting (DVB) format.

12. A digital broadcasting content transmitting apparatus for providing 2D content or 3D content, the apparatus comprising:
an elementary stream generating unit for encoding content comprising at least one from among the 2D content and the 3D content and generating an elementary stream comprising encoded data of the content;
a service additional information generating unit for generating service additional information comprising electronic program guide (EPG) information of the digital broadcasting content, and inserting at least one, into service additional information, from among 2D/3D content identification information representing a method of reproducing the 2D content or the 3D content, 2D/3D content link information representing a relationship between the 2D content and the 3D content, and EPG 3D reproduction information for reproducing an EPG screen, on which EPG information is displayed, in 3D; and
a transport stream generating unit for multiplexing the elementary stream and the service additional information and then generating a transport stream.

13. A digital broadcasting content receiving apparatus for providing 2D content or 3D content, the apparatus comprising:
a transport stream demultiplexer for demultiplexing an elementary stream comprising encoded data of content comprising at least one from among the 2D content and the 3D content and service additional information regarding the digital broadcasting content from a received transport stream;
a service additional information extracting unit for extracting, from the service additional information, electronic program guide (EPG) information for constituting an EPG screen of the digital broadcasting content, and at least one from among 2D/3D content identification information representing a method of reproducing the 2D content or the 3D content, 2D/3D content link information representing a relationship between the 2D content and the 3D content, and EPG 3D reproduction information for reproducing the EPG screen in 3D;
a content restoring unit for restoring the content by extracting the encoded data of the content and decoding the extracted data; and
a reproducing unit for reproducing the restored content and the EPG screen in 2D or 3D based on at least one from among the 2D/3D content identification information, the 2D/3D content link information, and the EPG 3D reproduction information.

14. A computer-readable recording medium having embodied thereon a computer program for executing the method of transmitting digital broadcasting content of claim 1.

15. A computer-readable recording medium having embodied thereon a computer program for executing the method of receiving digital broadcasting content of claim 6.
